# EUROPEAN PATENT APPLICATION

(11) **EP 4 425 404 A1**
(43) Date of publication of application: **04.09.2024**
(21) Application number: 22886918.6
(22) Date of filing: 21.10.2022
(51) Int. Cl.: G06Q 10/30, C08J 11/00

(54) **INFORMATION GENERATION METHOD, RECYCLING METHOD, INFORMATION GENERATION DEVICE, AND RECYCLING DEVICE**

(30) Priority: 29.10.2021 JP 2021177717; 10.12.2021 JP 2021200952
(71) Applicant: Mitsubishi Chemical Corporation, Chiyoda-ku Tokyo 100-8251 (JP)
(72) Inventor: HIRAKI Toshihiro, Tokyo 100-8251 (JP)
(74) Representative: Hoffmann Eitle
(86) International application number: PCT/JP2022/039403
(87) International publication number: WO 2023/074591

(57) **Abstract**

An information generation method includes: a manufacturing step; an input step; a generation step; and a registration step. In the manufacturing step, a product including a plastic article to which a chemical tag is attached is manufactured. In the input step, product information related to recycling of the product is input. In the generation step, tag product information with which the product information is associated in a wavelength spectral profile of the chemical tag readable from the product is generated. In the registration step, the tag product information is registered.

## Description

### [Technical Field]

The present invention relates to an information generation method, a recycling method, an information generation device, and a recycling device.

Priority is claimed on Japanese Patent Application No. 2021-177717, filed October 29, 2021, and Japanese Patent Application No. 2021-200952, filed December 10, 2021, the content of which is incorporated herein by reference.

### [Background Art]

Conventionally, waste plastics are processed in various types of methods such as landfills, ocean dumping, and incineration. All of the various types of methods have problems. A problem with landfills is that it is difficult to secure a landfill site. Ocean dumping is problematic from an environmental point of view because plastics do not decompose. Incineration has a problem that it causes global warming due to the emission of carbon dioxide gas.

Therefore, there is a growing need to recycle (reuse) waste plastics. When waste plastic films are recycled, it is necessary to classify the collected plastic films according to each material. In particular, it is possible to stabilize the quality of recycled products by separating materials with high accuracy.

In recent years, as a method of identifying the composition, a method of marking and authenticating a transparent product with a transparent polymer including a plastic XRF-identifiable marker has been proposed. Specifically, when an XRF-identifiable marker is irradiated with X-rays or gamma rays, a predetermined identifiable pattern is read (see, for example, Patent Document 1). Also, in a series of processes such as procurement, manufacturing, inventory management, delivery, sales, and consumption, barcodes and wireless tags are used to manage the whereabouts and evidence in each process.

### [Citation List]

### [Patent Document]

[Patent Document 1]
Japanese Translation of PCT International Application Publication No. JP-T-2019-520572

### [Summary of Invention]

### [Technical Problem]

However, in the conventional technology, if the barcode or wireless tag is damaged, each process cannot be tracked, and as a result, the composition of the waste material and the like are unknown, and the quality of a recycled product may deteriorate.

The present invention has been made in view of the above-described circumstances and an objective of the present invention is to provide technology capable of improving the quality of a recycled product.

### [Solution to Problem]

To solve the above-described problem, an information generation method which is one aspect of the present invention includes: a manufacturing step of manufacturing a product including a plastic article to which a chemical tag is attached; an input step of inputting product information related to recycling of the product; and a generation step of generating tag product information with which the product information is associated in a wavelength spectral profile of the chemical tag readable from the product; and a registration step of registering the tag product information.

To solve the above-described problem, a recycling method which is one aspect of the present invention includes: a first acquisition step of acquiring a wavelength spectral profile read from a waste plastic article obtained by decomposing a product to which a chemical tag is attached; a second acquisition step of acquiring product information related to recycling of the waste plastic article associated with the wavelength spectral profile; and an output step of outputting information for separating the waste plastic article on the basis of the product information.

In addition, an information generation device which is another aspect of the present invention includes: an input portion configured to input product information related to recycling of a manufactured product including a plastic article to which a chemical tag is attached; and a generation portion configured to generate tag product information with which the product information is associated in a wavelength spectral profile readable from the product; and a registration portion configured to register the associated information.

In addition, a recycling device which is another aspect of the present invention includes: a first acquisition portion configured to acquire a wavelength spectral profile read from a waste plastic article obtained by decomposing a product to which a chemical tag is attached; a second acquisition portion configured to acquire product information related to recycling of the waste plastic article associated with the wavelength spectral profile; and an output portion configured to output information for separating the waste plastic article on the basis of the product information.

### [Advantageous Effects of Invention]

According to the present invention, it is possible to improve the quality of a recycled product.

### [Brief Description of Drawings]

FIG. 1 is an explanatory diagram showing an example of each step of the recycling system 1 according to the present embodiment.
FIG. 2 is a block diagram showing an example of a configuration of a blockchain system.
FIG. 3 is a block diagram showing an example of a hardware configuration of factory terminal devices 130 to 132.
FIG. 4 is a flowchart of an example of steps performed by a recycling system 1.
FIG. 5 is an explanatory diagram showing an example of the transition of a chemical tag until a final product is reached.
FIG. 6 is an explanatory diagram showing an example of the transition of a chemical tag until a final product is reached.
FIG. 7 is an explanatory diagram showing an example of the transition of a chemical tag until a final product is reached.
FIG. 8 is an explanatory diagram showing an example of a tag product information DB 121.
FIG. 9 is a block diagram showing an example of a functional configuration of factory terminal devices 130 (130a and 130b) and 131 (131a to 131c) used in a manufacturing step.
FIG. 10 is a block diagram showing an example of a functional configuration of a factory terminal device 132 used in a separation step 17.
FIG. 11 is a flowchart showing an example of a process performed by the factory terminal devices 130 (130a and 130b) in a raw material step 11 of a material manufacturer 151.
FIG. 12 is a flowchart showing an example of a process performed by the factory terminal devices 131 (131a, 131b, and 131c).
FIG. 13 is a flowchart showing an example of a process performed by the factory terminal devices 131 (131a, 131b, and 131c).
FIG. 14 is a flowchart showing an example of a calculation process related to a carbon dioxide reduction amount in which each factory terminal device 130 is used in the manufacturing step.
FIG. 15 is a flowchart showing an example of a process performed by the factory terminal device 132 arranged in a separation company 154.

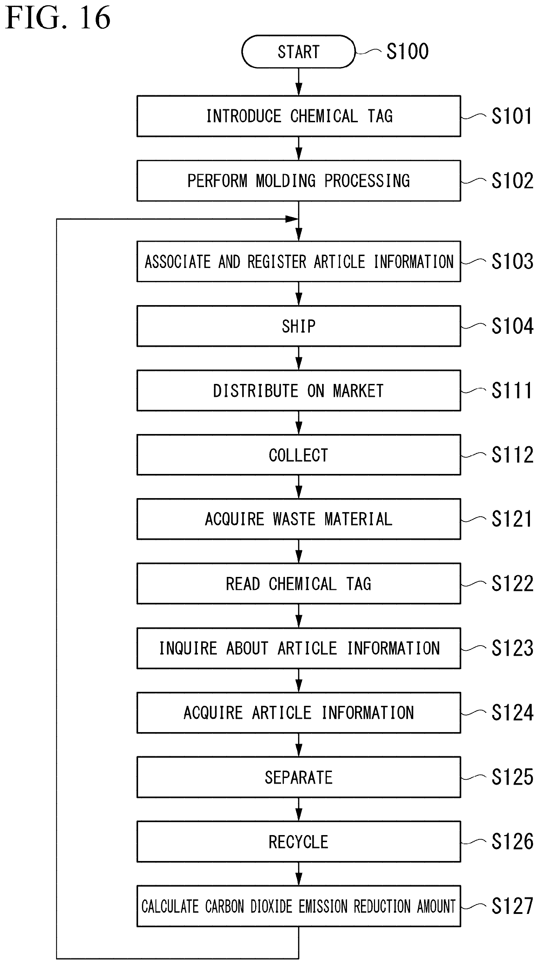

FIG. 16 is a flowchart based on a premise, showing an example of a method of manufacturing a recycled plastic product according to the present invention.

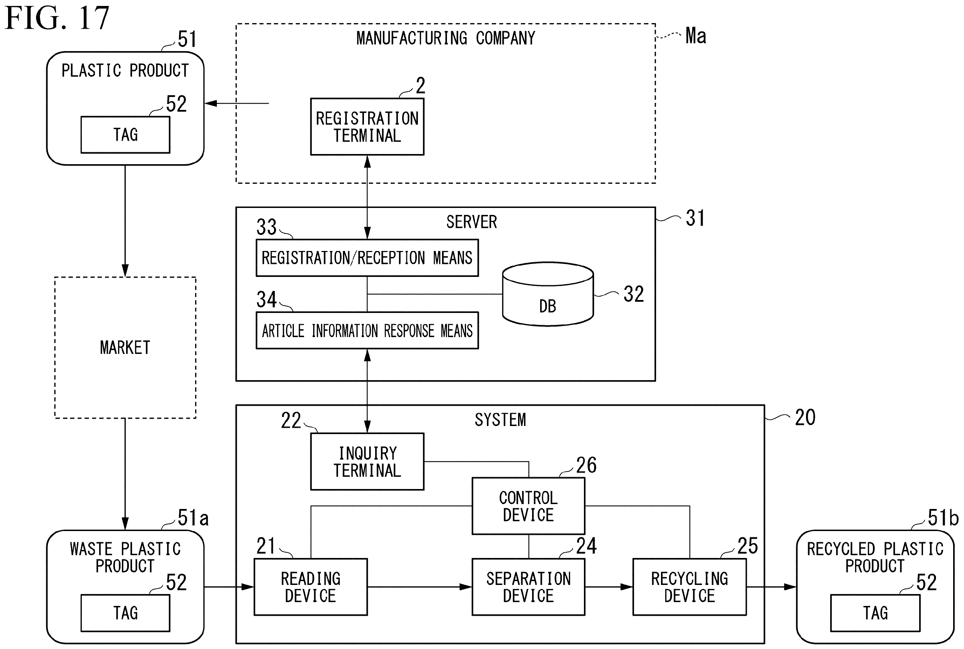

FIG. 17 is a functional block diagram including an embodiment example of a digital tracking ecosystem according to the present invention.

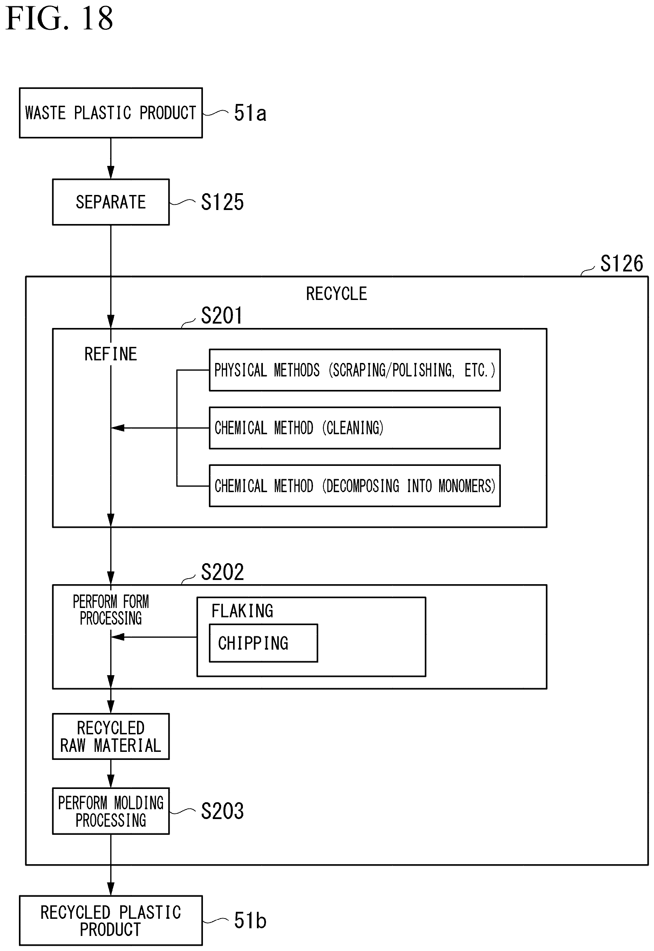

FIG. 18 is a flowchart showing an example of a method of obtaining a recycled raw material in a recycling process according to the present invention.

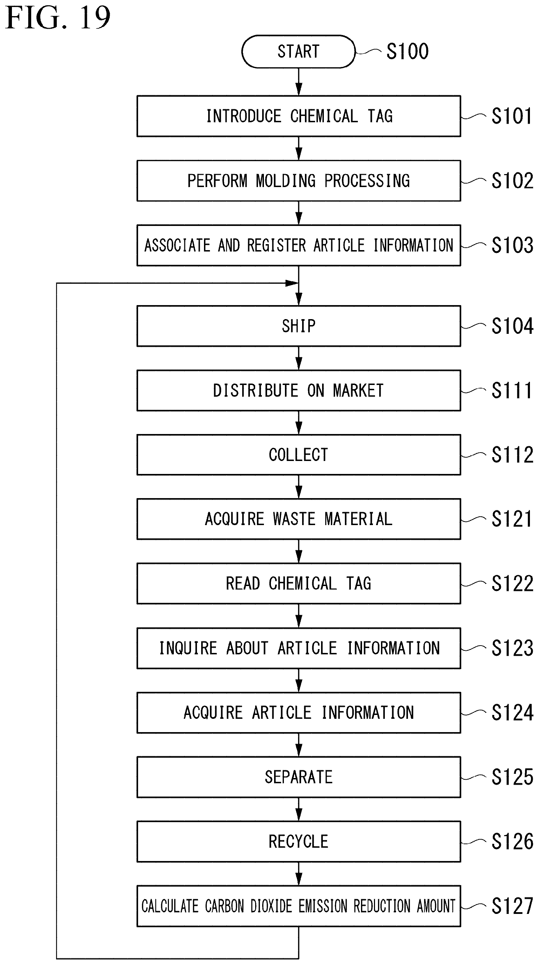

FIG. 19 is a flowchart based on a premise, showing another example of a method of manufacturing a recycled plastic product according to the present invention.

### [Description of Embodiments]

Next, an information generation method, a recycling method, an information generation device, and a recycling device of the present embodiment will be described with reference to the drawings. First and second embodiments to be described below are only examples and the embodiments to which the present invention is applied are not limited to the following first and second embodiments.

### (First embodiment)

First, plastics and a chemical tag used in the present embodiment will be described.

### <Plastics>

A plastic article included in a plastic product used in the present embodiment and a type of resin used as a raw material for a recycled plastic article included in a recycled plastic product are illustrated below.

As the used type of resin, there are polyester, polystyrene resin, polyvinyl chloride resin, polyvinylidene chloride resin, chlorinated polyethylene resin, polylactic acid resin, polybutylene succinate resin, polycarbonate resin, polyamide resin (including aramid resin), polyacetal resin, acrylic resin, ethylene-vinyl acetate copolymer, polymethylpentene resin, polyvinyl alcohol-based resin, cyclic olefin resin, polyacrylonitrile resin, polyethylene oxide resin, cellulose resin, polyimide resin, polyurethane resin, polyphenylene sulfide resin, polyphenylene ether resin, polyvinyl acetal resin, polybutadiene resin, polybutene-based resin, polyamide-imide resin, polyamide bismaleimide resin, polyetherimide resin, polyetheretherketone resin, polyetherketone resin, polyethersulfone resin, polyketone resin, polysulfone resin, fluorine resin, and the like. These resins may be used in one type alone or may be used in a combination of two or more types.

Among these, it is preferable to include polyester from the point of favorable compatibility with the chemical tag to be described below. Also, the type of polyester is, for example, a type obtained by performing a polycondensation process on a dicarboxylic acid component and a diol component.

The dicarboxylic acid components are, for example, terephthalic acid, isophthalic acid, orthophthalic acid, phthalic acid, 4,4'-diphenyldicarboxylic acid, 2,5-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, 2-potassium sulfoterephthalic acid, sodium 5-sulfoisophthalate, adipic acid, dimer acid, azelaic acid, sebacic acid, dodecane dicarboxylic acid, glutaric acid, succinic acid, and the like.

As the dicarboxylic acid component, tricarboxylic acids such as trimellitic acid and trimesic acid and tetracarboxylic acid such as pyromellitic acid can be used.

Furthermore, ester-forming derivatives of dicarboxylic acids, for example, acid anhydrides such as phthalic anhydride and trimellitic anhydride, and carboxylate such as monopotassium trimellitate can also be used as the dicarboxylic acid component.

The diol components are ethylene glycol, 1,2-propylene glycol, 1,3-propylene glycol, 1,3-propanediol, 1,4-butanediol, 1,6-hexanediol, 2-methyl-1,5-pentanediol, neopentyl glycol, 1,4-cyclohexanedimethanol, p-xylylene glycol, bisphenol A-ethylene glycol adduct, diethylene glycol, triethylene glycol, polyethylene glycol, polypropylene glycol, polytetramethylene ether glycol, spiroglycol, isosorbide, dimethylolpropionic acid, potassium dimethylol propionate, and the like. As the diol component, a trihydric or higher alcohol such as glycerin or trimethylolpropane can be used.

One or more types of each of the compounds may be appropriately selected and polyester may be synthesized according to a polycondensation reaction in a conventional method.

Also, the polyester may include biomass polyester obtained from a plant-derived raw material, for example, polyester in which biomass-derived ethylene glycol is used as a diol component.

Also, in the present embodiment, when the dicarboxylic acid component is 100 mol%, it is preferable to use polyester including 50% or more of an aromatic dicarboxylic acid or aliphatic dicarboxylic acid.

The polyester may be homopolyester or copolymerized polyester. The homopolyester is preferably obtained by performing a polycondensation process on aromatic dicarboxylic acid and aliphatic glycol. Among them, terephthalic acid and 2,6-naphthalenedicarboxylic acid are more preferably used as the aromatic dicarboxylic acid, and ethylene glycol, 1,4-butanediol, and 1,4-cyclohexanedimethanol are more preferably used as the aliphatic glycol. As representative polyesters, polyethylene terephthalate (PET), polyethylene naphthalate (PEN), and the like can be illustrated and PET is more preferable from the viewpoint of versatility.

On the other hand, when the polyester is copolymerized polyester, a compound that is the main component of the dicarboxylic acid component constituting the polyester and a third component other than the compound that is the main component of the diol component are included as the copolymer synthesis portion. For example, the third component is a component other than terephthalic acid and ethylene glycol in PET. Specific examples of dicarboxylic acids and diols, which are the main and third components, are as described above.

Plastic articles and recycled plastic articles are, for example, films and bottles. For example, the form of the plastic article is a bottle, and the form of the recycled plastic article is a film, i.e., it may be recycled into a different form such as bottle to film. The plastic article and the recycled plastic article are, for example, films, and are polyester films in the present embodiment.

In addition, it is only necessary to use a general method for a processing method of molding into a predetermined shape such as a film from a resin used as a raw material.

### <Chemical tag>

Tags also include physical tags such as QR codes (registered trademarks) and barcodes. Although physical tags can be identified and tracked within a limited period of time, it becomes difficult to perform an authentication, identification, or tracking process once the physical tag is separated from the product or damaged.

On the other hand, the chemical tag is a tag attached to the resin itself that is the raw material for plastic articles and recycled plastic articles. For this reason, the product including the article and the chemical tag are not separated. For this reason, for example, it is possible to authenticate, identify, and track the product regardless of whether the plastic film into which the chemical tag is introduced is in the form of a roll or a sheet.

The chemical tag has a wavelength spectral profile. The wavelength spectral profile is identification information corresponding to a waveform obtained in a read process performed by a predetermined reading device. The wavelength spectral profile is associated with product information to be described below. The wavelength spectral profile is a set of values differing according to each wavelength capable of being identified via any spectroscopic device. Also, chemical tags can be superimposed. When chemical tags are superimposed, superimposed wavelength spectral profiles can also be obtained.

A chemical tag is used to authenticate, identify, and track a plastic product and a waste plastic product of the discarded plastic product through a wavelength spectral profile. Also, a chemical tag is used to authenticate, identify, and track a recycled plastic product including a recycled plastic article even if the chemical tag is included in the recycled plastic article recycled from the waste plastic article included in the waste plastic product.

In this way, chemical tags are used to authenticate, identify, and track any one of plastic products, waste plastic products, recycled plastic products, waste recycled plastic products of the discarded recycled plastic products, and the like.

In addition, as a method of adding a chemical tag, the chemical tag and the resin (for example, polyester) used as a raw material for the plastic article may be made into a masterbatch in advance, or the chemical tag may be added directly at a raw material input stage in the step of manufacturing the plastic article. Also, it is possible to add a chemical tag in each step until a final product.

Here, micro-tag silica and X-ray fluorescence (XRF)-identifiable markers can be applied to the chemical tag. First, micro-tag silica will be described in detail.

### <Micro-tag silica>

Micro-tag silica includes, for example, porous silica particles with pores in nanometer units in diameter. Among the plastic articles, for example, in the plastic film, especially in the polyester film field, silica particles are included for the main purpose of imparting smoothness and preventing scratches in each step. For this reason, porous silica particles with pores having nanometer-unit diameters have little effect on the basic properties of the film. For this reason, the plastic film including the porous silica particles can be used without problems in practical use.

Porous silica particles are made of countless pores with diameters in units of nanometers formed on the surface of high-purity silica particles. For example, porous silica particles are silica particles with nanoporous structures in which countless micropores, mesopores, or macropores are formed.

Using an optical spectroscopic reader such as a hyperspectral camera that spectroscopically images light for each wavelength, a specific reflection pattern (for example, a reflection spectrum, a reflection peak, a reflection amplitude, or the like) based on pores of porous silica particles can be obtained. A specific reflection pattern based on the pores of porous silica particles becomes a spectral (optical) mark. Because this reflection pattern differs according to a pore structure (shape) in units of nanometers, it can be used as a wavelength spectral profile (identification information).

### <XRF-identifiable marker>

Also, XRF-identifiable markers made of combinations of a plurality of elements can be applied to chemical tags. XRF-identifiable markers include one or more compounds of elements whose presence can be confirmed from fluorescent X-rays. A wavelength spectral profile can be obtained by reading its presence through a reading device (fluorescent X-ray reader) capable of radiating X-rays. Wavelength spectral profiles indicate what combinations of compounds or specific elements are present. An XRF-identifiable marker is a chemical tag in which an identification code is assigned to this combination.

Elements that can be used as XRF-identifiable markers herein include, for example, one or more types of atoms among Na, Si, P, S, Cl, K, Ca, Ti, V, Cr, Mn, Fe, Co, Ni, Cu, Zn, Ga, As, Br, Rb, Sr, Y, Zr, Nb, Mo, Tc, Ru, Rh, Ag, Cd, In, Sn, Sb, Te, I, Cs, Ba, La, and Ce.

Hydroxyl compounds, chloride compounds, bromide compounds, iodide compounds, oxides, sulfonates, carboxylates, phosphates, oxides, sulfides, and the like of metallic elements among the above elements can be used as the compounds of the XRF-identifiable markers.

By using a fluorescent X-ray reader that detects the energy and intensity of fluorescent X-rays generated when X-rays are radiated to a sample, a reflection pattern (for example, a reflection spectrum, reflection peak, reflection amplitude, or the like) indicating the component elements and constituent ratios of the substance can be obtained. Such a specific reflection pattern becomes a spectral (optical) mark. Because this reflection pattern differs according to each XRF-identifiable marker, it can be used as a wavelength spectral profile (identification information).

In addition, the chemical tag may include both porous silica particles and an XRF-identifiable marker. Furthermore, the chemical tag can be different from porous silica particles or XRF-identifiable markers.

### <Product information>

Next, product information will be described. The product information is information assigned in each step until final products of a plastic product and a recycled plastic product are reached, such as a company that processed a product, a processing method, a purpose, a lot, and a recycling method. Specifically, the product information includes, for example, manufacturer information such as a country of manufacture of a plastic product, a manufacturing company, and a manufacturing factory. In particular, the manufacturing company is included as the manufacturer information so that a carbon dioxide emission reduction amount can be calculated for each manufacturing company to be described below.

Also, the product information includes information such as the composition, formulation, and purpose of the plastic product. For example, the purpose is a purpose such as an optical or packaging purpose assumed at a manufacturing stage or a shipping stage in a plastic product manufacturing company.

By including information about the composition, formulation, and purpose of the plastic product in the product information, information about the original plastic product, which is the origin of the collected waste plastic product, can be understood in more detail. Thereby, because waste materials can be decomposed and separated according to the product information, it is possible to efficiently manufacture recycled plastic products. Thus, the quality of recycled plastic products (recycled products) can be stabilized.

### <Tag product information>

Next, tag product information will be described. The tag product information is information in which the wavelength spectral profile and the product information are associated. In the present embodiment, the tag product information is managed by a system using a blockchain. By managing the tag product information on the system, it is possible to obtain product information associated with the read wavelength spectral profile by reading the wavelength spectral profile of the chemical tag in each of the steps from a manufacturing step to a waste material step. That is, regardless of the step of the plastic product, the work staff can ascertain the product information in each step.

### <Each step of recycling system 1 according to present embodiment>

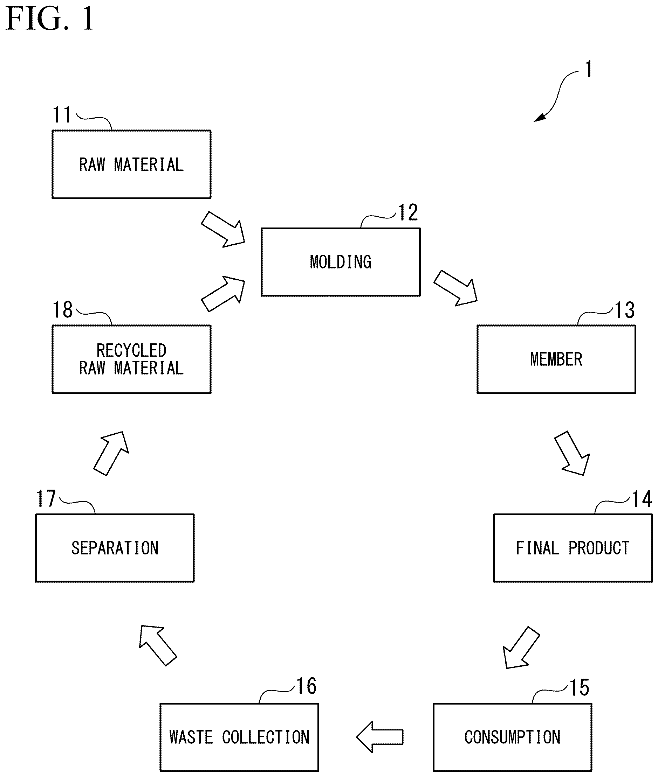

FIG. 1 is an explanatory diagram showing an example of each step of the recycling system 1 according to the present embodiment. In FIG. 1, a raw material step 11 is a step of processing a new raw material to manufacture a material. A molding step 12 is a step of molding a molded product, for example, into a film, using a material manufactured in the raw material step 11. The molding step 12 also includes a step (primary processing step) in which a functional layer is provided during molding. In addition, it is also possible to combine materials in the molding step 12. A member step 13 is a step of processing the molded product into a member. The member is manufactured, for example, by superimposing one film and another film. The member step 13 also includes a step (secondary processing step) in which a functional layer is further provided on the molded product manufactured first. A final product step 14 is a step of manufacturing a product to be provided to the final consumer using the member. For example, in the final product step 14, the member manufactured in the member step 13 is attached to or incorporated into the final product.

A consumption step 15 is a step in which the final product is consumed by the consumer. A waste collection step 16 is a step in which the consumed final product is collected as waste. A separation step 17 is a step of separating a plastic article obtained by decomposing the collected final product. A recycled raw material step 18 is a step of processing the plastic article separated in the separation step 17 into a recycled raw material and manufacturing a waste plastic article as a raw material. When the recycled raw material step 18 is completed, the movement to the molding step 12 is made and subsequently the steps from the molding step 12 to the recycled raw material step 18 can be iterated in the recycling system 1. In addition, in the raw material step 11 and a recycled raw material step 18, it is also possible to manufacture a material using both a new raw material (virgin raw material) and a recycled raw material.

### (Configuration of blockchain system)

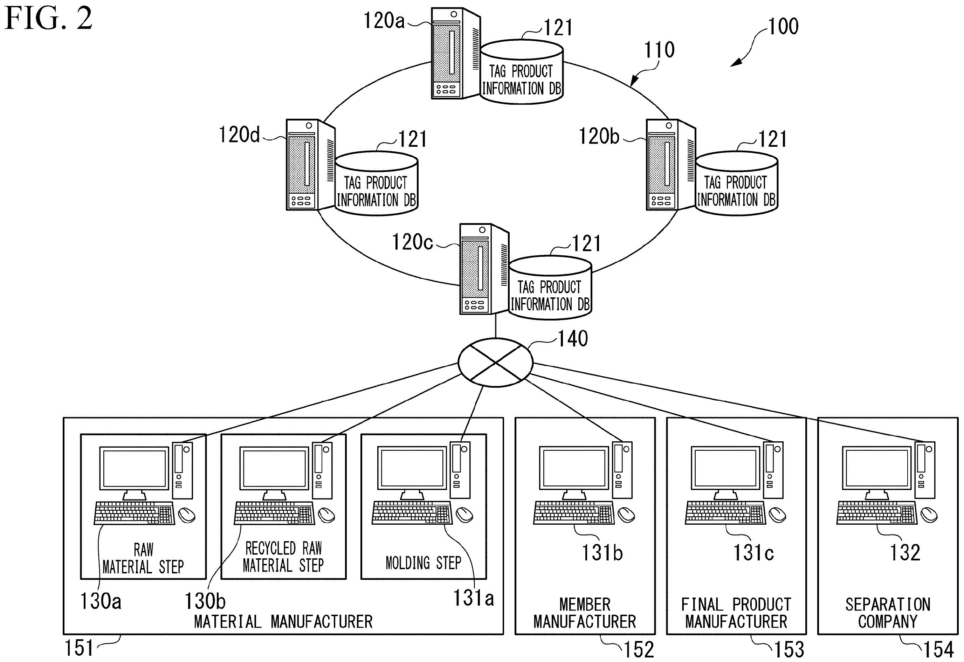

FIG. 2 is a block diagram showing an example of a configuration of a blockchain system. In FIG. 2, the blockchain 100 includes a network 110, node servers 120 (120a to 120d), factory terminal devices 130 to 132 (130a, 130b, 131a, 131b, 131c, and 132), and a network 140. The network 110 is a peer to peer (P2P) network in which communication between a plurality of computers is performed. Although the number of node servers 120 is four for convenience as shown in FIG. 2, the number is more than four in reality.

The network 110 includes, for example, a terminal (node server 120) called a peer. In this blockchain 100, because there is no entity equivalent to a server in the client-server form, the provision of services does not stop even if a specific peer disconnects. In this way, the blockchain 100 can be said to be a "decentralized" system because each participant is on an equal footing.

The node server 120 can form verification/agreement on transactions in a consensus algorithm of the blockchain 100. In the blockchain 100, a certain amount of transaction data (transactions) generated in the network 110 is stored in a block for a certain amount of time. Also, a generated block is connected to the back of the newest block that exists at that time and accumulated. As a result, the blocks are connected like a chain in chronological order.

Specifically, each block of the blockchain 100 includes a hash value and a nonce value in addition to transaction data. The hash value is an irregular string of characters that can only be converted in one direction, and is obtained from original data in an algorithm using a hash function. Only the same hash value can be obtained from certain transaction data. Also, the transaction data of the previous block is necessarily recorded as a hash value in a new block. The nonce value is a number that is used only once. The hash value used in a subsequent block is changed by the nonce value.

Therefore, if the transaction data in a block generated at a certain point in time in the past is falsified, the hash value obtained from the block will be different from the regular one. To perform the falsification, the hash values of all subsequent blocks shall be changed. It is substantially impossible to make such a change in the hash value. For this reason, the blockchain 100 has an excellent structure robust to falsification.

Each node server 120 stores a tag product information database (DB) 121 that stores tag product information. Under one of the node servers 120 (the node server 120c in FIG. 2), the factory terminal devices 130 to 132 are connected in a hanging form via the network 140 such as the Internet.

The factory terminal devices 130 to 132 are information processing devices to be manipulated by work staff in each step. In the factory terminal devices 130 to 132, predetermined applications (an information generation program and a recycling program) are installed. The factory terminal devices 130 to 132 receive a product information registration manipulation of the work staff using a predetermined application. The factory terminal devices 130 to 132 are information processing devices that can be connected to the network 140 by wire or wirelessly, for example, such as personal computers, smartphones, or tablet terminal devices. Hereinafter, the application may be referred to as an "app."

The factory terminal device 130a is arranged at a manufacturing site where the raw material step 11 in the material manufacturer 151 is performed. The factory terminal device 130b is arranged at the manufacturing site where the recycled raw material step 18 of the material manufacturer 151 is performed. The factory terminal device 131a is arranged at the manufacturing site where the molding step 12 of the material manufacturer 151 is performed. The factory terminal device 131b is arranged at the manufacturing site where the member step 13 is performed at the member manufacturer 152. The factory terminal device 131c is arranged at the manufacturing site where the final product step 14 at the final product manufacturer 153 is performed. The factory terminal device 132 is arranged at a work site where the separation step 17 at the separation company 154 is performed.

### (Hardware configuration of factory terminal devices 130 to 132)

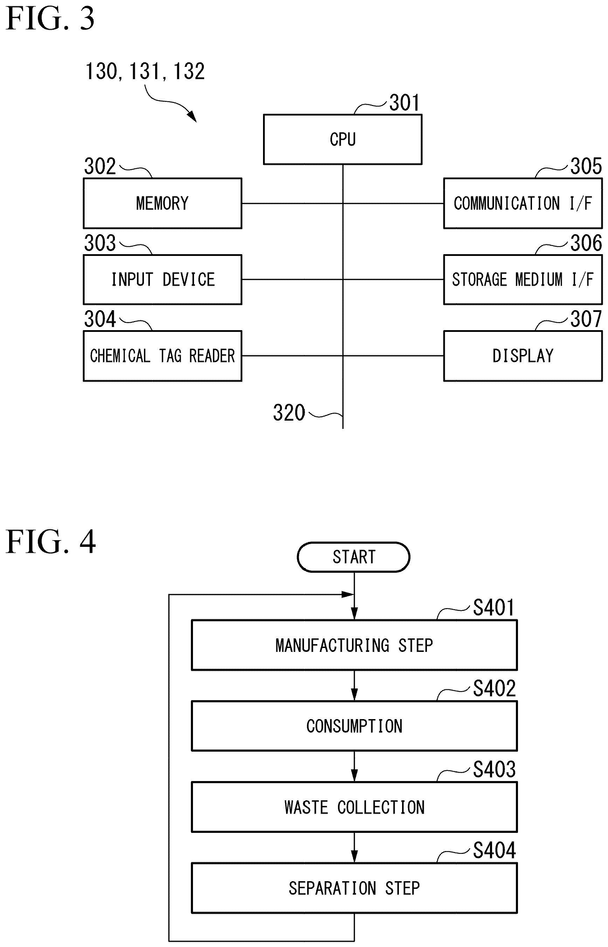

FIG. 3 is a block diagram showing an example of the hardware configuration of the factory terminal devices 130 to 132. In FIG. 3, the factory terminal devices 130 to 132 include a central processing unit (CPU) 301, a memory 302, an input device 303, a chemical tag reader 304, a communication interface (I/F) 305, a storage medium I/F 306, and a display 307. Also, the component portions 301 to 307 are connected through a bus 320.

The CPU 301 is responsible for the overall control of the factory terminal devices 130 to 132. The memory 302 includes, for example, a read-only memory (ROM), a random-access memory (RAM), and a flash ROM. For example, the flash ROM or the ROM stores various types of programs. The various types of programs include an information generation program and a recycling program according to the present embodiment. The RAM is used as a work area for the CPU 301. The program stored in the memory 302 is loaded into the CPU 301 and therefore causes the CPU 301 to execute a coded process.

The input device 303 includes a touch panel, a keyboard, a mouse, a microphone, and the like.

The chemical tag reader 304 includes the optical spectroscopic reader and the fluorescent X-ray reader described above.

The communication I/F 305 is connected to the network 140 such as the Internet through a communication circuit and is connected to another device via the network 140. Also, the communication I/F 305 is responsible for an interface between the network 140 and the inside of the own device and controls the input/output of data from other devices (for example, the node server 120 and other factory terminal devices 130 to 132). For example, a modem, a LAN adapter, or the like can be adopted in the communication I/F 305.

The storage medium I/F 306 controls a process of reading and writing data from and to a storage medium (not shown) such as a magnetic disk or an optical disk according to the control of the CPU 301.

The display 307 is an output device for displaying an image. In addition to the display 307, the factory terminal devices 130 to 132 may include a microphone and a printer as output devices.

### (Example of steps performed by recycling system 1)

FIG. 4 is a flowchart of an example of steps performed by the recycling system 1. As shown in FIG. 4, first, a manufacturing step is performed to manufacture a product including a plastic article to which a chemical tag is attached (step S401). The raw materials in the manufacturing step include virgin raw materials and recycled raw materials. Also, the manufacturing step includes a raw material step 11, a molding step 12, a member step 13, a final product step 14, and a recycled raw material step 18.

When the final product is completed, the product is distributed and the consumption step 15 is performed (step S402). Also, when the product is used by the user and the use is completed, the waste collection step 16 is performed (step S403). The separation step 17 in which the collected product is decomposed into waste plastic articles and separable is performed (step S404). Also, the separated waste plastic articles are reused in the manufacturing step of step S401. Thus, the recycling system 1 can iterate the steps that are steps S401 to S404.

Although the manufacturing step of a recycled plastic article has been described in the above-described example, it is not limited thereto and a similar manufacturing step can be performed even for a biomass plastic article. In this case, the raw materials in the manufacturing step include biomass raw materials.

When biomass and/or recycled plastic articles are manufactured in the manufacturing step, because articles using eco-friendly materials and recycled materials can be authenticated, it leads to the certification of using eco-friendly materials and recycled materials and the contribution to circular recycling and reduction of a carbon dioxide emission amount.

### (Example of transition of chemical tags until final product is reached)

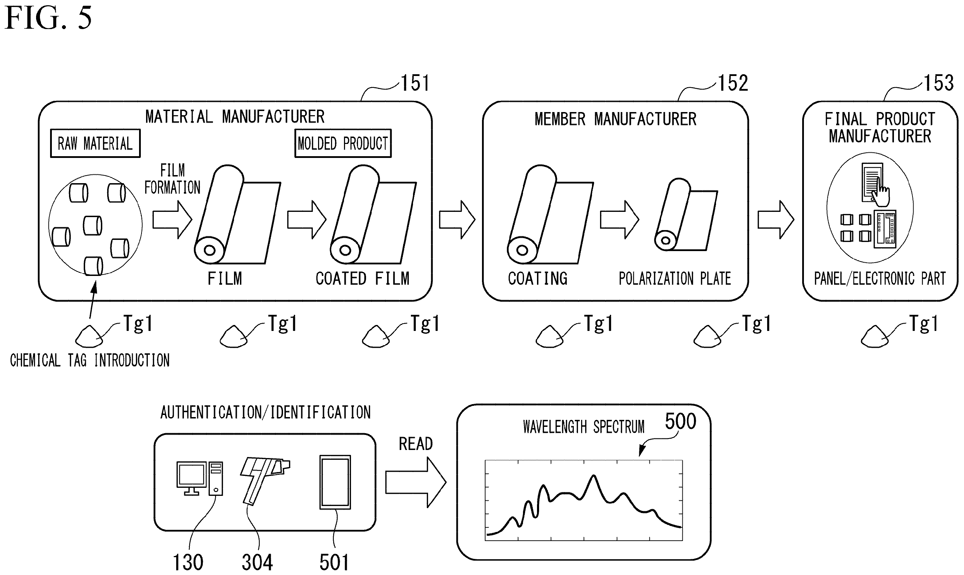

FIGS. 5 to 7 are explanatory diagrams showing an example of the transition of a chemical tag until the final product is reached.

In the recycling system 1 according to the present embodiment, it is possible to manufacture the final product with a chemical tag identical to that attached at the raw material stage.

A case where the final product is reached with a single chemical tag introduced into the raw material step will be described with reference to FIG. 5. As shown in FIG. 5, a chemical tag Tg1 is introduced into the product in the raw material step 11. When the chemical tag Tg1 of the product is read by the chemical tag reader 304, a wavelength spectrum 500 is obtained.

In the molding step 12, a film is formed and further molded into a coated film (primary processing). In the molding step 12, no other chemical tags are introduced. Also, in the member step 13 of the member manufacturer 152, it is coated (secondary processing) or processed into a polarization plate. In the member step 13, there is no introduction of a chemical tag. Also, in the final product step 14 of the final product manufacturer, it is processed into a panel or an electronic component and incorporated into the final product. In the final product step 14, no other chemical tags are introduced.

In addition, in any one of the steps that are the molding step 12, the member step 13, and the final product step 14, product information is rewritten by inputting the product information.

In the example shown in FIG. 5, there is no introduction of other chemical tags in each step until the final product. For this reason, when the chemical tag Tg1 is read by the chemical tag reader 304 in each step, the same wavelength spectrum 500 is obtained in any step.

Also, in the recycling system 1 according to the present embodiment, it is possible to manufacture a final product with a chemical tag different from the chemical tag attached at the raw material stage.

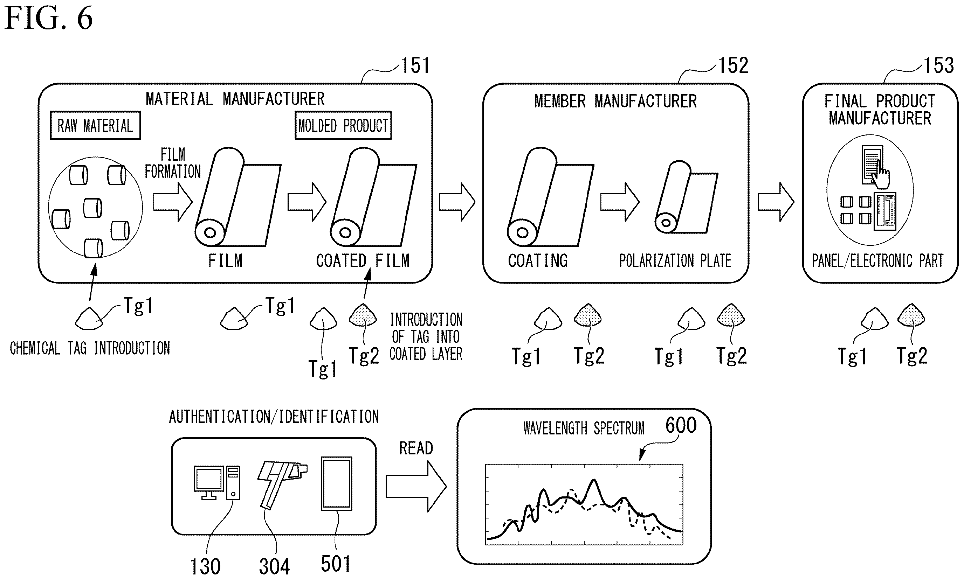

A case where another chemical tag is introduced during the step on the way will be described with reference to FIG. 6. As shown in FIG. 6, the chemical tag Tg1 is introduced into the product in the raw material step 11. When the chemical tag Tg1 of the product is read by the chemical tag reader 304, the wavelength spectrum 500 (see FIG. 4) is obtained.

In the molding step 12, a film is formed and further molded into a coated film. It is assumed that another chemical tag Tg2 is introduced into a coated layer in the molding of the coated film. When the coated film is read by the chemical tag reader 304, a wavelength spectrum 600 obtained by superimposing the wavelength spectrum of the chemical tag Tg1 and the chemical tag Tg2 is obtained. Although the wavelength spectrum 600 separately expresses the wavelength spectrum of the chemical tag Tg1 and the wavelength spectrum of the chemical tag Tg2, for convenience, in FIG. 6, it may be expressed by a sum of the chemical tag Tg1 and the chemical tag Tg2 in reality.

Thereafter, it is assumed that no other chemical tags shall be introduced into the member step 13 or the final product step 14. In the example shown in FIG. 6, because another chemical tag Tg2 is introduced into the step until the final product, the wavelength spectrum 500 obtained in the raw material step 11 and the wavelength spectrum 600 obtained in the subsequent step are different. In addition, it is also possible to introduce other chemical tags into the member step 13 and the final product step 14. In this case, the wavelength spectrum will change every time another chemical tag is introduced.

Also, in the recycling system 1 according to the present embodiment, the final product includes plastic articles to which one or more chemical tags are attached at the raw material stage. Also, in the recycling system 1, it is possible to introduce a plurality of chemical tags in one step.

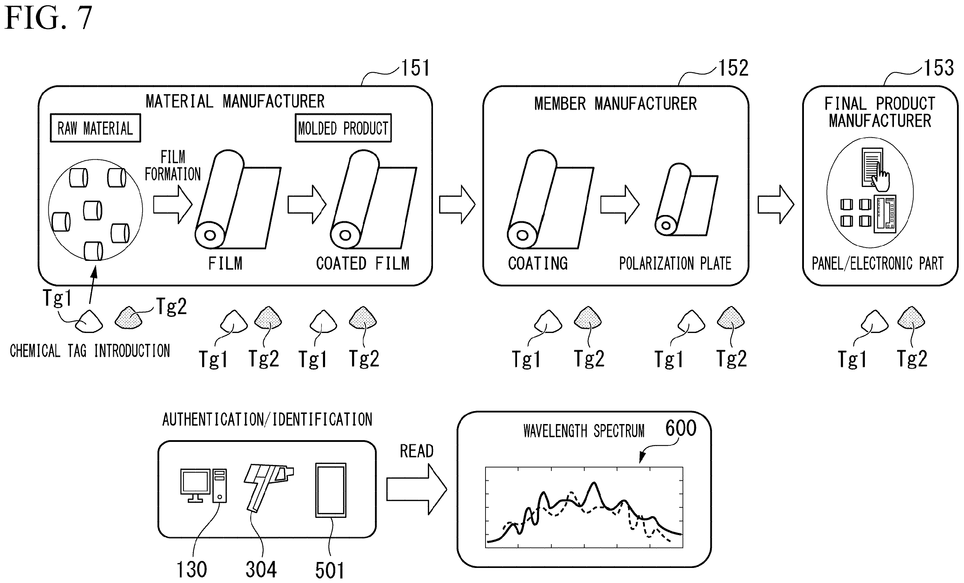

A case where a plurality of chemical tags (two types) are introduced into the raw material step and the final product is reached in the present condition will be described with reference to FIG. 7. In addition to the raw material step 11, it is possible to introduce a plurality of chemical tags in one of other steps.

As shown in FIG. 7, the chemical tags Tg1 and Tg2 are introduced into the product in the raw material step 11. When the product is read by the chemical tag reader 304, the wavelength spectrum 600 is obtained. Thereafter, it is assumed that no other chemical tags shall be introduced into the molding step 12, the member step 13, and the final product step 14. For this reason, when the product is read by the chemical tag reader 304 in each step, the wavelength spectrum 600 is obtained.

In each step of the molding step 12, the member step 13, and the final product step 14, it is also possible to introduce a plurality of chemical tags in one step. In this case, the wavelength spectrum will change every time a plurality of chemical tags are introduced.

### (Example of tag product information DB121 stored in node server 120)

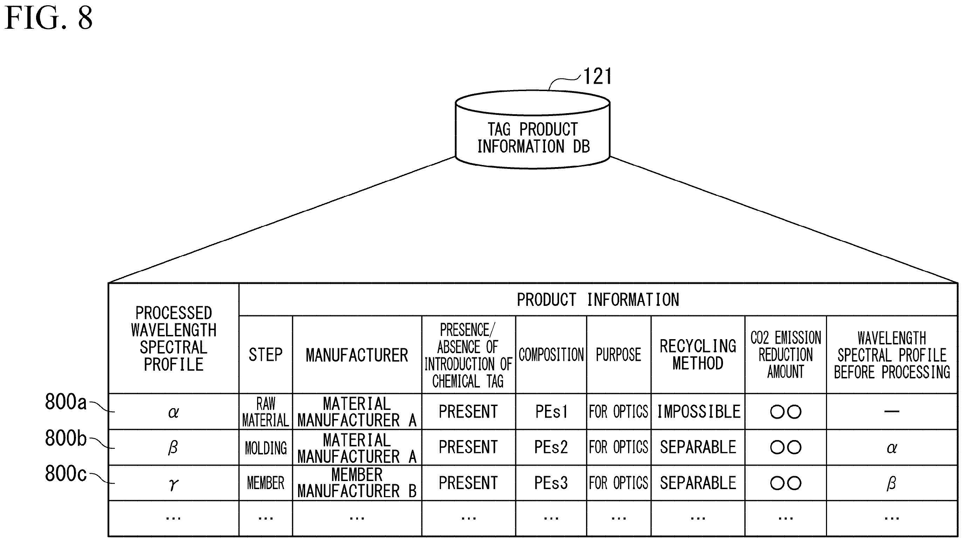

FIG. 8 is an explanatory diagram showing an example of the tag product information DB 121. As shown in FIG. 8, the tag product information DB 121 includes "wavelength spectral profile after processing" and "product information." "Wavelength spectral profile after processing" indicates the wavelength spectral profile read after processing in each manufacturing step. "Product information" includes information input after processing in each manufacturing step and information input until the previous step. In addition, the transition of tag product information 800 when the steps from the raw material step 11 to the member step 13 have been performed for a certain product will be described with reference to FIG. 8.

"Product information" includes "step," "manufacturer," "presence or absence of introduction of chemical tag," "composition," "purpose," "recycling method," "carbon dioxide emission reduction amount," "wavelength spectral profile before processing," and the like.

"Step" is any manufacturing step among the steps until the final product is reached.

"Manufacturer" is a manufacturer that performed processing in the step.

"Presence or absence of introduction of chemical tag" is either "presence" indicating that a chemical tag has been introduced or "absence" indicating that a chemical tag has not been introduced.

"Composition" is a composition of the product.

"Purpose" is the purpose of the product in the next and subsequent steps.

"Recycling method" indicates whether or not the product processed in the manufacturing step can be separated after collection.

"Carbon dioxide emission reduction amount" is a carbon dioxide emission amount reduced in the step when a recycled product is manufactured as compared to the manufacture of a new product (non-recycled product).

"Wavelength spectral profile before processing" is a wavelength spectral profile before processing in the step and is obtained, for example, by a reading manipulation by the work staff at the stage of delivering the product.

Specifically, tag product information 800a indicates that "wavelength spectral profile after processing" is "α," and that a composition "PEs1" has been introduced into the manufacture of a material for optics performed by material manufacturer A. In the tag product information 800a, the recycling method is "non-separable," i.e., it is indicated that it can be recycled as "PEs1." Also, because it is a raw material step 11 which is the first step of the manufacturing stage, information about "wavelength spectral profile before processing" is not recorded in the tag product information 800a. In addition, "PEs" indicates polyester.

Next, tag product information 800b will be described. The tag product information 800b indicates that "wavelength spectral profile after processing" is "β" and that a composition "PEs 2 " has been introduced as a chemical tag in the molding step 12 performed by material manufacturer A. In the tag product information 800b, the recycling method indicates "separable," i.e., it is indicated that it can be separated into "PEs 1" and "PEs2" and recycled.

Also, in the tag product information 800b, "wavelength spectral profile before processing" is "α." For this reason, it is possible to obtain product information (the tag product information 800a) associated with the wavelength spectral profile "α" from the tag product information 800b.

Next, tag product information 800c will be described. The tag product information 800c indicates that "wavelength spectral profile after processing" is "γ" and that a composition "PEs3" has been introduced as a chemical tag in the member step 13 performed by member manufacturer B. In the tag product information 800c, the recycling method indicates "separable," i.e., it is indicated that it can be separated into "PEs1," "PEs2," and "PEs3" and recycled. Also, in the tag product information 800c, "wavelength spectral profile before processing" is "β."

For this reason, it is possible to obtain product information (the tag product information 800b) associated with the wavelength spectral profile "β" from the tag product information 800c. Furthermore, it is also possible to obtain product information (the tag product information 800a) associated with "α" of "wavelength spectral profile before processing" by obtaining product information (the tag product information 800a) associated with the wavelength spectral profile "β" from the tag product information 800b.

In addition, in the drawing, the product information includes "wavelength spectral profile before processing" and product information before processing is obtained on the basis of "wavelength spectral profile before processing," but is not limited thereto. For example, the product information may include product information before the step as it is.

Thus, the tag product information 800 can obtain product information going back to past steps. Also, as the tag product information approaches the final product, a large amount of product information is added to the wavelength spectral profile after processing.

### (Example of functional configuration of factory terminal devices 130 and 131 used in manufacturing step)

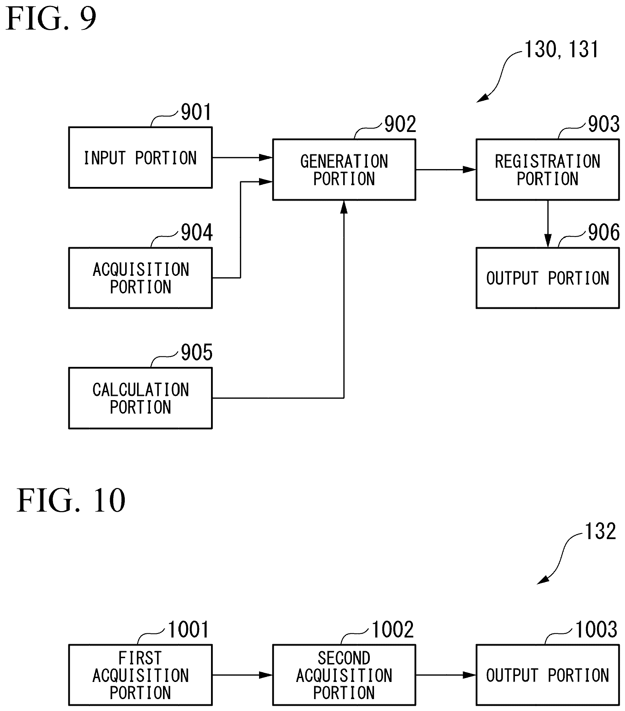

FIG. 9 is a block diagram showing an example of a functional configuration of the factory terminal devices 130 (130a and 130b) and 131 (131a and 131c) used in the manufacturing step. The factory terminal devices 130 and 131 are examples of the information generation device. In FIG. 9, the factory terminal devices 130 and 131 include an input portion 901, a generation portion 902, a registration portion 903, an acquisition portion 904, a calculation portion 905, and an output portion 906. The portions 901 to 906 are implemented by the CPU 301. That is, the CPU 301 executes an information generation program to implement the functions of the portions 901 to 906.

In the recycling system 1, products including plastic articles with chemical tags are manufactured. The input portion 901 inputs product information. The input portion 901 inputs the product information received by the input device 303 from the work staff. The product information is information related to the recycling of the manufactured product. Specifically, as shown in FIG. 8, the product information includes information such as "step," "manufacturer," "presence or absence of introduction of chemical tag," "composition," "purpose," "recycling method," and "wavelength spectral profile before processing."

The generation portion 902 generates tag product information in which product information is associated with the wavelength spectral profile of the chemical tag readable from the product.

The registration portion 903 registers the tag product information. In the present embodiment, the registration portion 903 registers the tag product information on the node server 120 with a system using the blockchain 100. However, the registration portion 903 may register tag product information in the server in the client-server system. Also, the registration portion 903 may register the tag product information in its own device.

The output portion 906 outputs the tag product information. Specifically, the output portion 906 transmits the tag product information to the node server 120 via the communication I/F 305.

Also, the recycling system 1 includes a plurality of steps until the final product is reached. The generation portion 902 generates tag product information in which new product information is associated with the wavelength spectral profile every time each step is performed until the final product is reached. In addition, in the recycling system 1, only one step may be included until the final product is reached. For example, the final product may be a pre-molded product on which only the raw material step has been completed.

### (Reading of chemical tag)

The acquisition portion 904 acquires a wavelength spectral profile read from the manufactured product. The acquisition portion 904 acquires the wavelength spectral profile read by the chemical tag reader 304. In the manufacturing step, the reading of the chemical tag is performed automatically. Specifically, in the manufacturing step, the chemical tag reader 304 is fixedly arranged, for example, on a factory line. For example, when the manufactured product is allowed to flow on the line, the chemical tag reader 304 reads the chemical tag of the flowing product.

In addition, in the manufacturing step, the reading of the chemical tag may be performed manually. Specifically, the work staff may hold the chemical tag reader 304 with the hands and manually read the chemical tag of the product. In this case, the chemical tag reader 304 may be a smartphone 501 or a tablet terminal (not shown). An app capable of reading a chemical tag may be installed on the smartphone 501 or a tablet terminal, and the chemical tag may be read using the app.

It is only necessary for the chemical tag reader 304 to read the wavelength spectral profile in units of manufactured products. The product unit is, for example, a lot unit of a product or a product type (model number) unit. The product unit may also be one manufactured product unit. In addition, in the case of the same type of product, because the same type of chemical tag is attached, it has a similar wavelength spectral profile, but there are individual differences in the wavelength spectrum of the chemical tag for each product.

Also, when the wavelength spectral profile of the product manufactured in the same manufacturing step is known, for example, when average data of the wavelength spectral profile (data obtained by associating the product and the average of the wavelength spectral profile) is accumulated, the reading of the wavelength spectral profile by the chemical tag reader 304 may be omitted. In this case, it is only necessary for the acquisition portion 904 to acquire the average of the wavelength spectral profile corresponding to the product from the accumulated data.

Also, a reading process of the chemical tag reader 304 may be performed until a certain amount of data is accumulated for the wavelength spectral profile and, after a certain amount of data is accumulated, an average thereof may be used and therefore the reading process may be omitted.

The generation portion 902 generates tag product information in which the product information is associated with the wavelength spectral profile acquired by the acquisition portion 904.

### (Regarding calculation of carbon dioxide emission reduction amount)

The calculation portion 905 calculates a carbon dioxide emission reduction amount on the basis of a raw material amount for a recycled plastic product. Specifically, comparative data for carbon dioxide emission amounts per unit mass of the target raw materials to be included in the products to be manufactured when the product is manufactured using recycled raw materials and when the product is manufactured using raw materials of a new article (non-recycled product) is provided. Also, the calculation unit calculates a total carbon dioxide emission reduction amount on the basis of the mass of recycled raw materials included in the manufactured product and the comparative data.

In addition, the comparative data is provided for each product (for example, each type of plastic). For this reason, the calculation portion 905 can calculate a carbon dioxide emission reduction amount for each product. The calculation portion 905 calculates the carbon dioxide emission reduction amount for each manufacturing step. Also, the calculation portion 905 can calculate the total carbon dioxide emission reduction amount until the manufacturing step in which the own device is used.

The generation portion 902 generates tag product information in which the carbon dioxide emission reduction amount is associated with the wavelength spectral profile.

### (Example of functional configuration of factory terminal device 132 used in separation step 17)

FIG. 10 is a block diagram showing an example of the functional configuration of the factory terminal device 132 used in the separation step 17. The factory terminal device 132 is an example of a recycling device. In FIG. 10, the factory terminal device 132 includes a first acquisition portion 1001, a second acquisition portion 1002, and an output portion 1003. The portions 1001 to 1003 are implemented by the CPU 301. That is, the CPU 301 executes a recycling program to implement the functions of the portions 1001 to 1003.

The first acquisition portion 1001 acquires a wavelength spectral profile read from a waste plastic article obtained by decompressing a product to which a chemical tag is attached. In the separation company 154, the reading of the chemical tag is performed automatically. Specifically, in the separation company 154, the chemical tag reader 304 is fixedly arranged on, for example, a factory line. For example, when the decomposed waste plastic article is allowed to flow on the line, the chemical tag reader 304 reads the chemical tag of the flowing plastic article.

In addition, in the separation company 154, the reading of the chemical tag may be performed manually. Specifically, the work staff may hold the chemical tag reader 304 with the hands and manually read the chemical tag of the waste plastic article. In this case, the chemical tag reader 304 may be a smartphone 501 or a tablet terminal (not shown). An app capable of reading a chemical tag may be installed on the smartphone 501 or the tablet terminal and the chemical tag may be read using the app.

The second acquisition portion 1002 acquires product information related to the recycling of waste plastic articles associated with the wavelength spectral profile acquired by the first acquisition portion 1001. Specifically, the second acquisition portion 1002 makes a transmission request for tag product information including the wavelength spectral profile acquired by the first acquisition portion 1001, with respect to the node server 120.

The transmission request includes a wavelength spectral profile. When the node server 120 receives the transmission request from the factory terminal device 132, a wavelength spectral profile having highest similarity to the wavelength spectrum included in the transmission request is retrieved and tag product information including the wavelength spectral profile corresponding to a retrieval result is extracted. Also, the node server 120 transmits the extracted tag product information to the factory terminal device 132.

Also, the second acquisition portion 1002 receives tag product information from the node server 120, extracts product information from the received tag product information, and acquires product information of waste plastic articles. The product information includes, for example, information about each item shown in FIG. 8.

The output portion 1003 outputs information for separating waste plastic articles on the basis of the product information acquired by the second acquisition portion 1002. The information for separating is, for example, information for use in separation, such as disposal, separable, non-separable, and a type of plastic article. By using this information, waste plastic articles can be sorted on the factory line.

In addition, for example, when the composition consists of three materials (for example, A, B, and C), some can be separated into three parts "A," "B," and "C" and some cannot be separated into three parts. For example, some substances can only be separated into two parts, "A + B" and "C," and some cannot be separated as "A + B + C." some that cannot be further separated, such as "A + B" and "A + B + C," are used for recycling in the state of "A + B" or "A + B + C."

In addition, even if it can be separated into three parts, "A," "B," and "C," it may be reused in "A + B." Specifically, for example, when a product in which a functional layer (material B) is laminated on a plastic film (material A) is reused, there are some that can be reused without removing the functional layer. On the other hand, depending on the formulation of the functional layer, the functional layer shall be separated or removed. For this reason, the product information includes information such as the extent to which each product can be separated/removed and information such as the extent to which each product can be reused at the stage of separation/removal.

### (Example of process performed by each factory terminal device 130 in the manufacturing step)

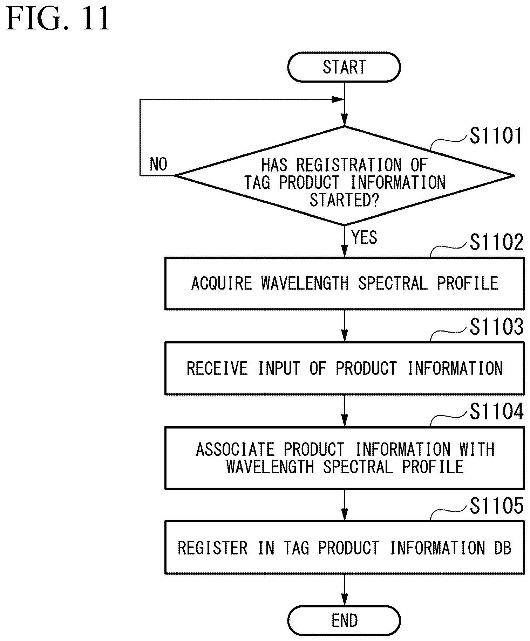

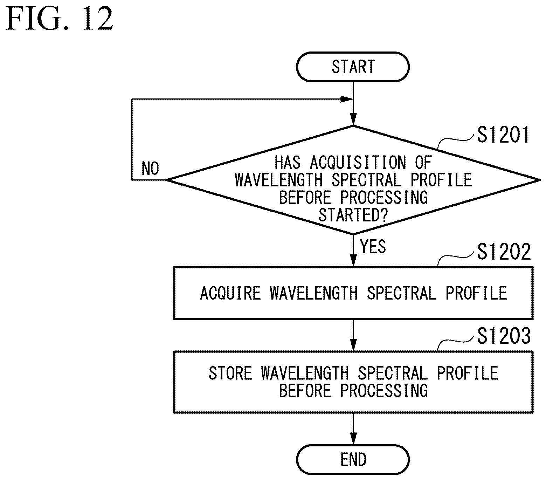

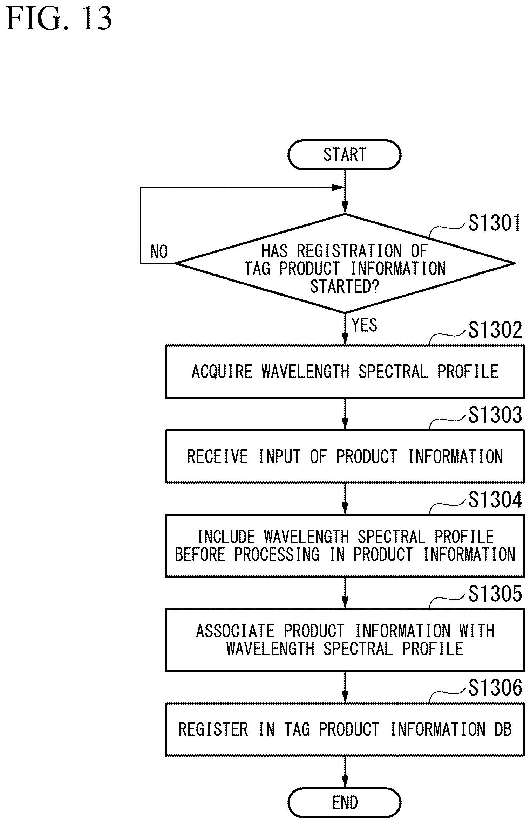

Next, a process performed by each factory terminal device 130 in the manufacturing step will be described with reference to FIGS. 11 to 13. The processing of the first step (the raw material step 11) will be described with reference to FIG. 11 and the processing of steps (the molding step 12, the member step 13, and the final product step 14) after the end of the raw material step will be described with reference to FIGS. 12 and 13.

### (Process performed by factory terminal device 130 in raw material step 11)

FIG. 11 is a flowchart showing an example of a process performed by the factory terminal devices 130 (130a and 130b) in the raw material step 11 of the material manufacturer 151. In FIG. 11, the factory terminal device 130 determines whether or not a predetermined application has been activated and registration of tag product information has started (step S1101). The registration of the tag product information automatically or manually starts. The term "automatic" indicates, for example, that the registration starts at a timing when the manufacture has been completed or at a timing when a predetermined period of time has elapsed. The term "manual" indicates, for example, that the input device 303 such as a mouse or keyboard receives an input indicating the start of the registration of the tag product information by receiving a predetermined manipulation from the work staff.

The factory terminal device 130 waits until the registration of the tag product information starts (step S1101: NO). When the registration of the tag product information starts (step S1101: YES), the factory terminal device 130 acquires a wavelength spectral profile of a product at a raw material stage read by the chemical tag reader 304 (step S1 102). In addition, when the chemical tag is manually read by the work staff, the factory terminal device 130 may prompt the work staff to read the chemical tag after step S1101. Prompting is, for example, outputting a message for prompting the work staff to read the chemical tag using the chemical tag reader 304 to the display 307, a speaker, or the like.

Also, the factory terminal device 130 receives an input of product information (step S1 103). When the product information is input to a predetermined input field and input content is confirmed, the factory terminal device 130 associates the product information with a wavelength spectral profile and generates tag product information (step S1104). Subsequently, the factory terminal device 130 registers the tag product information in the tag product information DB 121 of the node server 120 (step S1105), and ends a series of processing steps.

### (Process performed by the factory terminal device 131 in manufacturing step after raw material step)

FIGS. 12 and 13 are flowcharts showing examples of processes performed by the factory terminal devices 131 (131a, 131b, and 131c). The process shown in FIG. 12 is a process for acquiring a wavelength spectral profile of a product manufactured in a previous manufacturing step, for example, a process performed when the product is delivered.

In FIG. 12, the factory terminal device 131 determines whether or not a predetermined application has been activated and acquisition of the wavelength spectral profile before processing has started from the work staff (step S1201). The acquisition of the wavelength spectral profile before processing automatically or manually starts. The term "automatic" indicates, for example, that the registration starts at a predetermined timing before the start of manufacture. The term "manual" indicates, for example, that the input device 303 such as a mouse or keyboard receives an input indicating the start of acquisition of the wavelength spectral profile before processing by receiving a predetermined manipulation from the work staff.

The factory terminal device 131 waits until the acquisition of the wavelength spectral profile before processing starts (step S1201: NO). When the acquisition of the wavelength spectral profile before processing starts (step S1201: YES), the factory terminal device 130 acquires the wavelength spectral profile of the product before processing read by the chemical tag reader 304 (step S1202). Also, the factory terminal device 131 stores the wavelength spectral profile before processing in the memory 302 so that it is included in the product information after processing (step S1203) and ends a series of processing steps.

The process shown in FIG. 13 is a process at the time of registering tag product information of a product processed in each step in which the factory terminal device 131 is arranged. In FIG. 13, the factory terminal device 131 determines whether or not a predetermined application has been activated and registration of tag product information has started from the work staff (step S1301).

The factory terminal device 131 waits until the registration of the tag product information starts (step S1301: NO). When the registration of the tag product information starts (step S1301: YES), the factory terminal device 131 acquires the wavelength spectral profile of the product read by the chemical tag reader 304 (step S1302). Also, the factory terminal device 131 receives an input of the product information (step S1303).

Subsequently, when the product information is input in the predetermined input column and the input content is confirmed, the factory terminal device 131 includes the wavelength spectral profile before processing (see step S1203 in FIG. 12) stored in the memory 302 in the product information (step S1304). Also, the factory terminal device 131 associates the product information with the wavelength spectral profile and generates tag product information (step S1305). Subsequently, the factory terminal device 131 registers the generated tag product information in the tag product information DB 121 of the node server 120 (step S1306) and ends a series of processing steps.

### (Example of calculation process related to carbon dioxide reduction amount performed by each factory terminal device 130)

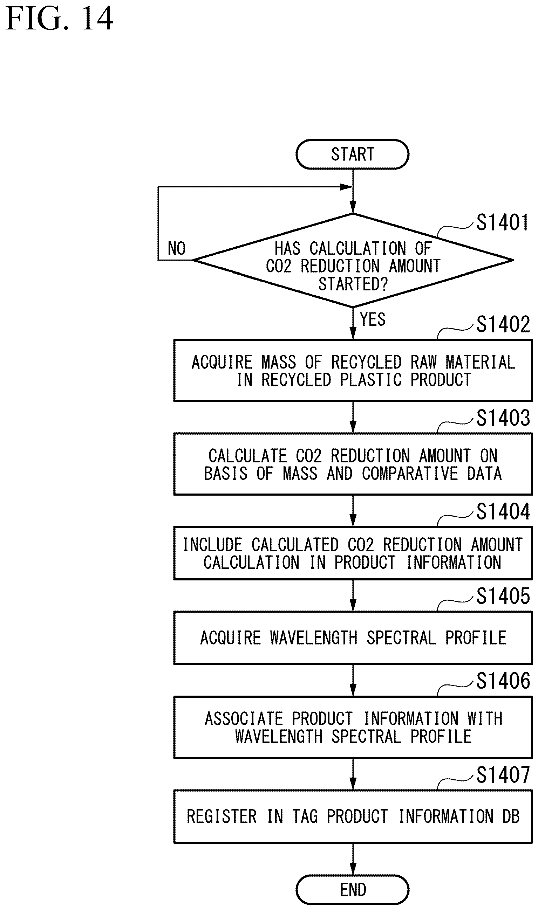

FIG. 14 is a flowchart showing an example of a calculation process related to a carbon dioxide reduction amount by each factory terminal device 130 in the manufacturing step. In FIG. 14, the factory terminal device 130 determines whether or not a predetermined application has been activated and calculation of the carbon dioxide reduction amount has started (step S1401). The calculation of the carbon dioxide reduction amount can automatically or manually start. The term "automatic" indicates, for example, that the calculation starts at a timing when manufacture has been completed or at a timing when a predetermined period of time has elapsed. The term "manual" indicates, for example, that the input device 303 such as a mouse or keyboard receives an input indicating the start of calculation of the carbon dioxide reduction amount by receiving a predetermined manipulation from the work staff.

The factory terminal device 130 waits until the calculation of the carbon dioxide reduction amount starts (step S1401: NO). When the calculation of the carbon dioxide reduction amount starts (step S1401: YES), the factory terminal device 130 acquires a mass of recycled raw materials in a recycled plastic product (step S1402). Also, the factory terminal device 130 calculates the carbon dioxide reduction amount on the basis of the acquired mass and comparative data when the product is manufactured using a new raw material (step S1403). Also, the factory terminal device 130 can output the calculated carbon dioxide reduction amount to the display 307 or the like.

Subsequently, the factory terminal device 131 includes the calculated carbon dioxide emission reduction amount in the product information (step S1404). Also, the factory terminal device 131 acquires a wavelength spectral profile of the product read by the chemical tag reader 304 (step S1405). Subsequently, the factory terminal device 130 associates the product information with the wavelength spectral profile and generates tag product information (step S1406). Subsequently, the factory terminal device 131 registers the generated tag product information in the tag product information DB 121 of the node server 120 (step S1407) and ends a series of processing steps.

### (Process performed by factory terminal device 132 in separation step)

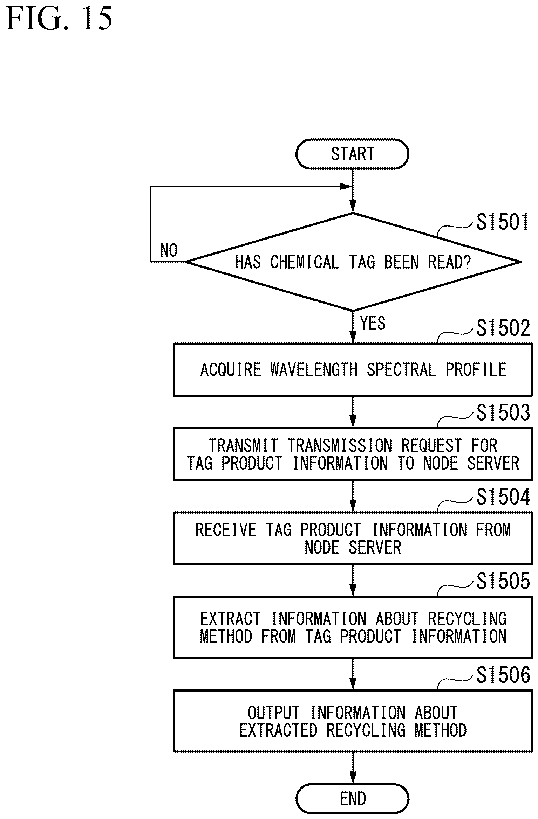

FIG. 15 is a flowchart showing an example of a process performed by the factory terminal device 132 arranged in the separation company 154. Also, in the process shown in FIG. 15, it is assumed that the final product is decomposed and the product is a waste plastic article.

In FIG. 15, the factory terminal device 132 determines whether a chemical tag of the plastic article obtained in the decomposition process has been read by the chemical tag reader 304 (step S1501). The factory terminal device 132 waits until the chemical tag is read by the chemical tag reader 304 (step S1501: NO).

When the chemical tag is read by the chemical tag reader 304 (step S1501: YES), the factory terminal device 132 acquires a wavelength spectral profile (step S1502). Also, the factory terminal device 132 makes a transmission request for tag product information including the acquired wavelength spectral profile to the node server 120 (step S 1503).

Also, the factory terminal device 132 receives the tag product information from the node server 120 in response to the transmission request (step S1504). Subsequently, the factory terminal device 132 extracts information about a recycling method from the tag product information (step S1505). Also, the factory terminal device 132 outputs the extracted information about the recycling method (step S1506) and ends a series of processing steps.

In addition, in step S1503, a transmission request for product information associated with the acquired wavelength spectral profile may be made in addition to making the transmission request for the tag product information. Also, in step S1504, product information may be received in addition to receiving the tag product information.

Here, the above-described process will be supplemented with a specific example. For example, if the wavelength spectral profile acquired in step S1502 is "β" (see FIG. 8), it turns out that the separation into "PEs1" and "PEs2" is possible because information related to the recycling method associated therewith is "separable" and the composition is "PEs1" and "PEs2." For this reason, when the decomposed plastic articles are allowed to flow on the line at the separation company 154, it is possible to perform a sorting process for moving to a step of separating the plastic article into "PEs1" and "PEs2" or prompt someone or something to separate the plastic article into "PEs1" and "PEs2."

Also, for example, if the wavelength spectral profile acquired in step S1502 is "α" (see FIG. 8), it turns out that reuse in "PEs1" is possible because the information about the recycling method associated therewith is "inseparable" and the composition is "PEs 1." For this reason, when the plastic articles decomposed by the separation company 154 are allowed to flow on the line, it is possible to perform a sorting process for moving to a step of reusing "PEs1" or notify that they cannot be further decomposed.

As described above, in the present embodiment, product information related to the recycling of a manufactured product including a plastic article to which a chemical tag is attached is registered in association with a wavelength spectral profile. Thereby, it is possible to obtain product information associated with the read wavelength spectral profile by reading the wavelength spectral profile of the chemical tag. Specifically, it is possible to obtain information of a manufacturing company for waste plastic products and information of a composition. Also, because the chemical tag is not separated from the product or is not damaged, it is possible to reliably authenticate, identify, and track the product. Thereby, because waste materials can be separated accurately, it is possible to appropriately select recycled raw materials used for recycled products. In addition, it will be possible to refine the separated waste materials in an appropriate method and quality management is facilitated. Therefore, the quality of recycled products can be improved.

Also, in the present embodiment, tag product information in which new product information is associated with the wavelength spectral profile is generated every time each step is performed in the manufacturing step. Thereby, the processing content can be appropriately registered in each step. Therefore, it is possible to easily ascertain the processing content in each step by reading the wavelength spectral profile of the chemical tag. Also, it is possible to reliably authenticate, identify, and track a product in each step.

Also, in the manufacturing step according to the present embodiment, a final product with a chemical tag identical to a chemical tag attached at a raw material stage is manufactured (see FIG. 5). Thereby, a waste plastic article having the same chemical tag can be easily extracted from the waste material and the waste plastic article can be appropriately refined. Therefore, the quality of recycled products can be improved.

Also, in the manufacturing step according to the present embodiment, a final product with a chemical tag different from the chemical tag attached at the raw material stage is manufactured (see FIG. 6). Thereby, even if the chemical tag changes before the final product is reached, product information can be associated with the chemical tag in each step. Therefore, it is possible to accurately track the product for each manufacturing step.

Also, in the manufacturing step according to the present embodiment, it is possible to attach two or more types of chemical tags in one step in the manufacturing step (see FIG. 7). Thereby, even if processing in which two or more types of chemical tags are attached in one step is performed, product information can be associated with the chemical tags in each step. Therefore, it is possible to accurately track the product for each manufacturing step.

Also, in the manufacturing step according to the present embodiment, tag product information in which product information is associated with the wavelength spectral profile read from the product is generated. Thereby, it is possible to register product information in association with the wavelength spectral profile read in each manufacturing step. Therefore, it is possible to accurately track the product for each manufacturing step.

Also, in the present embodiment, the tag product information is registered on the node server 120 by a system using a blockchain. Thereby, because it is difficult to falsify the tag product information stored in the tag product information DB 121, security can be improved. Also, because the work staff can easily confirm the product information in each step, the transparency of the tag product information can be increased.

Also, in the present embodiment, a recycled plastic product including a recycled plastic article to which a chemical tag is attached is manufactured and product information related to the recycling of the recycled plastic product is input. Thereby, it is possible to obtain product information of the recycled plastic product associated with the read wavelength spectral profile by reading the wavelength spectral profile of the chemical tag. Specifically, because information of the manufacturing company of recycled plastic products and information of the composition can be obtained, waste materials consisting of recycled plastic articles can be accurately separated. Thereby, the separated waste materials can be appropriately refined. Therefore, it is possible to improve the quality of recycled products and contribute to the construction of a recycling platform for the recycling of plastic resources.

Also, in the present embodiment, tag product information is generated by associating the carbon dioxide emission reduction amount calculated on the basis of the raw material amount of recycled plastic products with a wavelength spectral profile. Thereby, the work staff can ascertain the carbon dioxide emission reduction amount to be reduced according to the manufacture of recycled plastic products in each manufacturing step. Therefore, it can contribute to environmental conservation by promoting an increase in the carbon dioxide emission reduction amount.

Also, in the present embodiment, information for separating the plastic article is output on the basis of the product information associated with the wavelength spectral profile read from the plastic article obtained by decomposing the product. Thereby, in the separation step 17, it is possible to notify that the waste plastic article is further separated/removed or notify that the waste plastic article cannot be further separated/removed, so that the waste material can be accurately separated. Therefore, the separated waste material can be refined in an appropriate method. For this reason, the quality of recycled products can be improved.

### (Second embodiment)

Next, a second embodiment will be described. In addition, in the second embodiment, the content described in the first embodiment described above will be omitted as appropriate. It is also possible to appropriately combine the second embodiment and the first embodiment described above.

In the second embodiment, a digital tracking ecosystem including an inquiry terminal and a recycling device will be described. The inquiry terminal is a terminal configured to read a wavelength spectral profile of a chemical tag provided in the waste plastic product and receive article information associated with a wavelength spectral profile in response to an inquiry based on the wavelength spectral profile. The recycling device is a device configured to manufacture a recycled plastic product from waste plastic articles on the basis of the article information. Hereinafter, the second embodiment will be described from the technical background.

Waste plastics were subjected to processing such as landfills, ocean dumping, or incineration in the past, but it is becoming difficult to secure landfill sites and ocean dumping becomes an environmental problem because the plastics do not decompose.

Furthermore, although it can be used as heat by incineration, there is a problem that it leads to global warming due to the emission of carbon dioxide gas.

Therefore, due to the recent rise in environmental problems, there is a need for recycling such as reuse and recycling of waste plastics and research and development for this purpose is actively being conducted.

In addition, many plastics are produced by fossil fuels and there is a need to construct recycling methods from the viewpoint of effective use of resources.

In particular, in Japan, efforts to recycle PET bottles began in the 1990s, and the recycling rate of PET bottles is currently high.

PET bottle recycled raw materials are reused for bottles (bottle-to-bottle) and films (bottle-to-film), and, for example, biaxially oriented polyethylene terephthalate films obtained using recycled PET bottle raw materials are disclosed as technology related to the use of PET bottle recycled raw materials in Patent Document 2 (Japanese Unexamined Patent Application, First Publication No. 2014-065282).

On the other hand, a recycling rate of a plastic film such as a polyester film remains at a low level.

Because the plastic film is light, inexpensive, and highly processable for molding, it is used for various types of purposes of packaging, electronic components, electrical insulation, metallic laminate, display component members of flexible displays, touch panels, anti-reflection, glass shatterproof, and the like.

When plastic films are recycled, it is conceivable to authenticate and identify the collected plastic films so that the quality of recycled products is stabilized.

For example, Patent Document 3 (Japanese Unexamined Patent Application, First Publication No. 2002-173585) discloses a polyester film including 1 to 500 ppm by weight of dimethyl terephthalate as an inorganic compound that is a discriminating compound. For the added inorganic compound, metallic components can be detected by fluorescence X-ray analysis, atomic absorption spectrometry, inductively coupled plasma-optical emission spectrometry, or the like.

Also, Patent Document 4 (Japanese Unexamined Patent Application, First Publication No. 2002-173523) discloses a polyester film in which dimethyl terephthalate composed of an isotope of carbon or/and hydrogen is added in an amount of 1 to 1000 ppm by weight based on the total of dimethyl terephthalate as a discriminating compound. An isotopic compound of added dimethyl terephthalate can be distinguished from virgin dimethyl terephthalate by analyzing it with 13CNMR, 1HNMR, and a gas chromatograph mass spectrometer.

On the other hand, Patent Document 5 (Japanese Patent No. 5855646) proposes a system for adding a silica-based tag made of transparent silica to a product so that it can be identified. This tag includes a porous nanostructure generated by etching a mark, which can be read using an optical spectroscopic reader, to provide a specific reflectance spectrum.

Furthermore, Patent Document 6 (Japanese Unexamined Patent Application, First Publication No. 2019-529676) proposes a method of marking and authenticating a transparent product with a transparent polymer including an XRF-identifiable marker. When an XRF-identifiable marker is irradiated with X-rays or gamma rays, a predetermined identifiable pattern is shown.

Patent Document 7 (Japanese Translation of PCT International Application Publication No. JP-T-2019-520572) proposes a form of an XRF reader that reads such an XRF-identifiable marker.

Due to recent environmental problems, plastic manufacturers are becoming required to take responsibility for manufacturing and it is considered that it will be necessary to track and ascertain the flow of plastic products such as polyester films and other plastic films in the future.

Patent Documents 3 and 4 are considering the identification of the use of recycled resin using a discriminating compound and the prevention of quality deterioration of products using recycled resins, and the authentication and identification of the plastic film collected by encapsulating article information and the tracking and ascertainment of the flow of products such as plastic films are not considered at all.

Also, in Patent Documents 5 to 7, the application and development for recycling are not considered.

Therefore, the second embodiment is made in view of the above-mentioned actual situation and contributes to the reduction of a carbon dioxide emission amount by constructing a suitable recycling method and system using plastics that can be authenticated, identified, and tracked.

As a result of intensive examination, the present inventors have found the following configuration.

The second embodiment has the following aspects.
[1] A digital tracking ecosystem including:
   a reading device configured to read a wavelength spectral profile of a chemical tag provided in a waste plastic product;
   an inquiry terminal configured to make an inquiry on the basis of the wavelength spectral profile and receive article information associated with the wavelength spectral profile; and
   a recycling device configured to manufacture a recycled plastic product from the waste plastic product on the basis of the article information.
[2] The digital tracking ecosystem according to [1], wherein the article information includes manufacturer information.
[3] The digital tracking ecosystem according to [1] or [2], wherein the article information includes product identification information of the plastic product from which the waste plastic product is derived.
[4] The digital tracking ecosystem according to any one of [1] to [3], including a separation device for separating the waste plastic product based on the article information.
[5] The digital tracking ecosystem according to any one of [1] to [4], including a control device configured to execute a carbon dioxide emission reduction calculation step of calculating a carbon dioxide emission reduction amount from a recycled raw material amount in the recycled plastic product recycled by the recycling device.
[6] The digital tracking ecosystem according to any one of [1] to [4], wherein the article information includes manufacturer information, and wherein the digital tracking ecosystem includes a control device configured to calculate a carbon dioxide emission reduction amount for each manufacturer information item within a recycled raw material amount in the recycled plastic product recycled by the recycling device.
[7] The digital tracking ecosystem according to any one of [1] to [6], wherein the chemical tag includes an XRF-identifiable marker or micro-tag silica and the reading device is compatible with one or both thereof.
[8] A server for a digital tracking ecosystem including:
   a database configured to record a wavelength spectral profile of a chemical tag assigned to a plastic product and article information of the plastic product in association with each other,
   wherein an article information response means configured to respond to the article information that has been associated in response to an inquiry based on the wavelength spectral profile is executed.
[9] The server for the digital tracking ecosystem according to [8], wherein the article information includes manufacturer information.
[10] A method of manufacturing a recycled plastic product, the method including:
   a reading step of reading a wavelength spectral profile of a chemical tag provided in a waste plastic product;
   an information acquisition step of receiving article information associated with the wavelength spectral profile; and
   a recycling step of manufacturing the recycled plastic product from the waste plastic product on the basis of the article information.
[11] The method of manufacturing the recycled plastic product according to [10], wherein the article information includes manufacturer information.
[12] The method of manufacturing the recycled plastic product according to [10] or [11], wherein the article information includes product identification information of the plastic product from which the waste plastic product is derived.
[13] The method of manufacturing the recycled plastic product according to any one of [10] to [12], including a separation step of separating the waste plastic product based on the article information.
[14] The method of manufacturing the recycled plastic product according to any one of [10] to [13], including a carbon dioxide emission reduction calculation step of calculating a carbon dioxide emission reduction amount from a recycled raw material amount in the recycled plastic product recycled in the recycling step on the basis of the recycling step.
[15] The method of manufacturing the recycled plastic product according to [14],
   wherein the article information includes manufacturer information, and
   wherein a carbon dioxide emission reduction amount for each manufacturer information item is calculated from a recycled raw material amount in the recycled plastic product recycled in the recycling step.
[16] The method of manufacturing the recycled plastic product according to any one of [10] to [15], wherein the chemical tag includes an XRF-identifiable marker or micro-tag silica.

According to the second embodiment, it is possible to reduce a carbon dioxide emission amount by constructing a method and system for performing suitable recycling using plastics that can be authenticated, identified, and tracked.

Next, an example of the second embodiment will be described.

The second embodiment is a manufacturing method of manufacturing a recycled plastic product from a waste plastic product that is a waste material of a plastic product including a chemical tag, a digital tracking ecosystem that is a system for executing the manufacturing method, and a server for the system.

### <Plastic>

The types of resins used as raw materials for plastic products and recycled plastic products handled in the second embodiment are not particularly limited, and it is possible to use conventionally known ones, for example, polyester, polystyrene resin, polyvinyl chloride resin, polyvinylidene chloride resin, chlorinated polyethylene resin, polylactic acid resin, polybutylene succinate resin, polycarbonate resin, Polyamide resin (including aramid resin), polyacetal resin, acrylic resin, ethylene-vinyl acetate copolymer, polymethylpentene resin, polyvinyl alcohol resin, cyclic olefin resin, polyacrylonitrile resin, polyethylene oxide resin, cellulose resin, polyimide resin, polyurethane resin, polyphenylene sulfide resin, polyphenylene ether resin, polyvinyl acetal resin, polybutadiene resin, polybutene resin, polyamideimide resin, polyamide bismaleimide resin, polyetherimide resin, polyetherimide resin, polyetheretherketone resin, polyetherketone resin, polyethersulfone resin, polyketone resin, polysulfone resin, polysulfone resin, fluorine resin, and the like. These resins may be used in one type alone or may be used in a combination of two or more types.

Among these, it is preferable to contain polyester from the point of favorable compatibility with the chemical tag to be described below. Also, a type of polyester is not particularly limited. Specifically, polyester formed in polycondensation of a dicarboxylic acid component and a diol component can be cited.

The dicarboxylic acid component includes terephthalic acid, isophthalic acid, orthophthalic acid, phthalic acid, 4,4'-diphenyldicarboxylic acid, 2,5-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, 1,4-cyclohexanedicarboxylic acid, Examples thereof include 2-potassium sulfoterephthalic acid, sodium 5-sulfoisophthalate, adipic acid, dimer acid, azelaic acid, sebacic acid, dodecane dicarboxylic acid, glutaric acid, succinic acid, and the like.

As the dicarboxylic acid component, tricarboxylic acids such as trimellitic acid and trimesic acid and tetracarboxylic acid such as pyromellitic acid can also be used.

Furthermore, ester-forming derivatives of dicarboxylic acids, for example, acid anhydrides such as phthalic anhydride and trimellitic anhydride and carboxylate such as monopotassium trimellitate, can also be used.

Examples of the diol component include ethylene glycol, 1,2-propylene glycol, 1,3-propylene glycol, 1,3-propanediol, 1,4-butanediol, 1,6-hexanediol, 2-methyl-1,5-pentanediole, neopentyl glycol, 1,4-cyclohexanedimethanol, p-xylylene glycol, bisphenol A-ethylene glycol adduct, diethylene glycol, triethylene glycol, polyethylene glycol, polypropylene glycol, polytetramethylene ether glycol, spiroglycol, isosorbide, dimethylolpropionic acid, potassium dimethylol propionate, and the like. As the diol component, a trihydric or higher alcohol such as glycerin or trimethylolpropane can also be used.

It is only necessary to appropriately select one or more types of each of the compounds and synthesize polyester according to a polycondensation reaction in a usual method.

Also, the polyester may contain a biomass polyester obtained from a plant-derived raw material, for example, a polyester using a biomass-derived ethylene glycol as a diol component.

In the second embodiment, when the dicarboxylic acid component is 100 mol%, it is preferable to use a polyester including 50% or more of aromatic dicarboxylic acid or aliphatic dicarboxylic acid.

The polyester may be homopolyester or copolymer polyester. When it is made of homopolyester, it is preferable to obtain by polycondensation of aromatic dicarboxylic acid and aliphatic glycol. Among these, terephthalic acid and 2,6-naphthalenedicarboxylic acid are more preferable used as aromatic dicarboxylic acids, and ethylene glycol, 1,4-butanediol, and 1,4-cyclohexanedimethanol are more preferably used as aliphatic glycols. Examples of typical polyesters are polyethylene terephthalate (PET), polyethylene naphthalate (PEN), and the like, and PET is more preferable from the viewpoint of versatility.

On the other hand, when the polyester is copolymerized polyester, a third compound other than a compound used as the main component of the dicarboxylic acid component constituting the polyester and a compound used as the main component of the diol component is included as a copolymerization component. For example, the third component is a component other than terephthalic acid and ethylene glycol in PET. Specific examples of dicarboxylic acid and diol which are the main component and the third component are as described above.

The forms of the plastic product and the recycled plastic product are not particularly limited, and examples thereof include films and bottles. For example, the form of the plastic product is a bottle, and the form of the recycled plastic product is a film, i.e., it may be recycled into a different form such as bottle-to-film. Among these, the plastic product and the recycled plastic product are preferably films and are particularly preferably polyester films.

In addition, a method of performing molding processing from the resin used as a raw material into a product having a predetermined shape such as a film is not particularly limited and a conventionally known method can be used.

### <Chemical tag>

In the second embodiment, it is important to use a chemical tag. Physical tags such as QR codes and barcodes can be authenticated, identified, and tracked within a certain limit, but once the physical tag is separated from the product, it becomes difficult to authenticate, identify, and track the product.

On the other hand, because the resin itself as a raw material for the plastic product and the recycled plastic product can be tagged using a chemical tag as the tag, the product and the chemical tag are not separated. Therefore, for example, when the plastic product is a plastic film, the plastic film can be authenticated, identified, and tracked regardless of any form such as a roll or a sheet.

The chemical tag has a wavelength spectral profile capable of being identified in association with the article information of the plastic product. The term "has a wavelength spectral profile" indicates that the wavelength spectral profile can be read by a reading device corresponding to the type of chemical tag.

In the second embodiment, this chemical tag is used to authenticate, identify, and track a plastic product and a waste plastic product from which the plastic product has become a waste material through a wavelength spectral profile.

Also, even if a recycled plastic product recycled from the waste plastic product includes the chemical tag, it can be authenticated, identified, and tracked.

Thus, because the plastic product includes the chemical tag, it is possible to authenticate, identify, and track any one of a plastic product, a waste plastic product, a recycled plastic product, and a waste and recycled plastic product for which the recycled plastic product has become a waste material. Because the second embodiment is effective even in iterated recycling, it leads to the support of the circulation cycle of plastic resources.

The wavelength spectral profile is a set of values different for each wavelength that can be discriminated via any spectroscopic device, and is a profile capable of being identified between those that can be classified as an identical profile and those that can be classified as different profiles. It is not necessarily necessary to have a meaning in a shape itself. When a specific identifiable profile is recorded in association with specific article information, it is only necessary to identify and separate a product or an article from others by reading a chemical tag if there are the plastic product, the waste plastic article, the recycled plastic product, and the like including the chemical tag having the wavelength spectral profile.

The article information is information for authenticating and identifying the plastic product. This article information preferably includes manufacturer information such as a manufacturing country, manufacturing company, and manufacturing factory of the plastic product. In particular, it is preferable to include the manufacturing company as the manufacturer information so that a carbon dioxide emission reduction amount for each manufacturing company to be described below can be calculated.

By reading the wavelength spectral profile of the chemical tag and making it possible to authenticate and identify the associated manufacturer information, a plastic manufacturer can be held responsible for manufacturing and a carbon dioxide emission reduction amount according to the use of the recycled plastic for each plastic manufacturer can be calculated.

Also, it is possible to distinguish which company's product a collected waste plastic product is by authenticating and identifying the manufacturer information and waste plastic products derived from one company's plastic products are aligned and used as raw materials for recycled plastic products, leading to the stabilization of the quality of recycled plastic products that are manufactured.

Also, the article information preferably includes product identification information such as configuration, composition, and purpose information of the plastic product. Examples of the purpose include the classification assumed by a manufacturing company that manufactures plastic products at the manufacturing and shipping stages, such as for optical use and packaging.

Information about an original plastic product, which is the origin of the collected waste plastic product, can be understood in more detail by associating the composition, composition, and purpose information of the plastic product and the like, and the quality of recycled plastic products can be further stabilized by classifying them according to the article information and recycling them in an appropriate procedure.

The chemical tag is not particularly limited as long as it has a wavelength spectral profile that can be identified in association with the article information of the plastic product. For example, micro-tag silica using silica particles described in Japanese Translation of PCT International Application Publication No. JP-T-2013-531849 and the like can be used. Also, an XRF-identifiable marker based on a combination of a plurality of elements described in Japanese Translation of PCT International Application Publication No. JP-T-2019-529676 and the like can be used by associating a specific wavelength spectral profile based on the XRF-identifiable marker with article information in advance. Among these, the chemical tag preferably includes porous silica particles (a) having pores having a diameter in units of nanometers as micro-tag silica.

Among the plastic products, for example, in the plastic film, especially in the polyester film field, silica particles are conventionally included for the main purpose of imparting smoothness and preventing scratches in each step. Therefore, the porous silica particles (a) having pores having diameters in units of nanometers do not affect the basic characteristics of the film, and the plastic film including the porous silica particles (a) is considered to be able to be used without any practical problems.

In particular, when a metallic compound is used as a compound that can be easily authenticated and identified, when a functional layer is provided on a plastic film, there is a risk that the metallic compound migrates to the surface of the functional layer or there is a risk that the curing of the functional layer may be inhibited during secondary processing even in the case of a small amount of a metallic compound.

However, because silica particles are conventionally used for general purposes, there is no such risks and it is considered that they can be used without any practical problems.

In addition, the plastic product to which the second embodiment is applied is not limited to a plastic film as described above, but it is only necessary for the plastic product to be a plastic that can be collected as a waste plastic product.

Examples of the porous silica particles (a) include those described in Japanese Translation of PCT International Application Publication No. JP-T-2013-531849 and the like. More specifically, a myriad of pores having a diameter in units of nanometers, preferably micropores, mesopores or macropores, are formed on the surface of the high-purity silica particles, and silica particles having a nanoporous structure can be used.

Using an optical spectroscopic reader, a specific reflection pattern based on the pores of the porous silica particles (a) can be read. Such a specific reflection pattern based on the pores of the porous silica particles (a) becomes a spectral (optical) mark and can be used as a wavelength spectral profile for use in the second embodiment.

Specifically, when an optical spectroscopic reader such as TruTag's hyperspectral camera is used, a specific reflection pattern (for example, a reflection spectrum, a reflection peak, a reflection amplitude, or the like) based on the shape of the hole (pore) of the porous silica particle (a) can be obtained and read. That is, the porous silica particles (a) can be read using an optical spectroscopic reader.

Therefore, by applying light to the plastic product and the waste plastic product that is the waste material thereof, the recycled plastic product, or the like, and detecting a specific reflection pattern, it is possible to authenticate and identify the plastic product, the waste plastic product, the recycled plastic product, and the like.

Also, because this reflection pattern differs according to the structure (shape) of the pore in units of nanometers, it can be used as the wavelength spectral profile. By associating this reflection pattern used as the wavelength spectral profile with specific product information (manufacturer information, configuration, composition, and purpose information of products, or the like), it is possible to apply an association result to the authentication and identification of various products.

In addition, the "various products" mentioned here can be arbitrarily designated depending on information associated with each product grade, each purpose, each manufacturing company, or each lot.

As used herein, the term "diameter in units of nanometers" indicates that the diameter is 10-12 m (units of picometers) or more and 10-6 m (units of micrometers) or less.

The pores of the porous silica particles (a) preferably have a diameter of 0.001 nm (10-12 m) or more and 100 nm (10-7 m) or less, more preferably have a diameter of 0.001 nm (10-12 m) or more and 10 nm (10-8 m) or less, and most preferably have a diameter of 0.001 nm (10-12 m) or more and 1 nm (10-9 m) or less.

Also, likewise, the pores of the porous silica particles (a) preferably have a diameter of 0.01 nm (10-11 m) or more and 1000 nm (10-6 m) or less, more preferably have a diameter of 0.1 nm (10-10 m) or more and 1000 nm (10-6 m) or less, and most preferably have a diameter of 1 nm (10-9 m) or more and 1000 nm (10-6 m) or less.

In a specific embodiment of the second embodiment, the porous silica particles (a) preferably include at least one type selected from the group consisting of:
(a1) porous silica particles having micropores having a pore diameter of 0.001 nm or more and less than 2 nm;
(a2) porous silica particles having mesopores having a pore diameter of 2 nm or more and 50 nm or less; and
(a3) porous silica particles having macropores having pore diameters of more than 50 nm and 1000 nm or less.

In one aspect of the second embodiment, the porous silica particles (a) preferably include at least one of the porous silica particles (a1) having micropores and the porous silica particles (a2) having mesopores.

The porous silica particles (a) in the present embodiment preferably have a pore diameter of 0.001 nm (10-12 m) or more and 50 nm (5×10-8 m) or less, more preferably have a pore diameter of 0.01 nm (10-11 m) or more and 50 nm (5×10-8 m), and most preferably have a pore diameter of 0.1 nm (10-10 m) or more and 50 nm (5×10-8 m) or less.

In another aspect of the second embodiment, the porous silica particles (a) preferably include at least one of the porous silica particles (a2) having mesopores and the porous silica particles (a3) having macroporosity.

The porous silica particles (a) in the present embodiment preferably have a pore diameter of 2 nm (2×10-9 m) or more and 1000 nm (10-6 m) or less and more preferably have a pore diameter of 2 nm (2×10-9 m) or more and 100 nm (10-7 m) or less.

In the second embodiment, as the porous silica particles (a), the porous silica particles (a1) having micropores, the porous silica particles (a2) having mesopores and the porous silica particles (a3) having macropores can also be used. Among these, the plastic film preferably includes the porous silica particles (a2) having mesopores as the porous silica particles (a).

When the plastic product, the waste plastic product, and the recycled plastic product used in the second embodiment have the porous silica particles (a) as the chemical tag, because the wavelength spectral profile is included as a spectral (optical) mark derived from the pores provided in the porous silica particles (a), the spectral mark can be read with an optical spectroscopic reader to authenticate the product or identify the product.

An average particle size of the porous silica particles (a) is preferably 10 to 150 µm, more preferably 10 to 100 µm, further preferably 10 to 50 µm, and most preferably 10 to 35 µm.

The average particle size of the porous silica particles (a) can be obtained by measuring the diameters of 10 or more particles with a scanning electron microscope (SEM) and calculating an average value thereof. At this time, in the case of non-spherical particles, an average value of a longest diameter and a shortest diameter can be measured as the diameter of each particle.

The content of the porous silica particles (a) in the plastic product is preferably 2 to 6000 ppm. If the content of the porous silica particles (a) is 2 ppm or more, the performance as a chemical tag, such as obtaining a specific reflection pattern, is fully demonstrated.

On the other hand, if the content of the porous silica particles (a) is 6000 ppm or less, the dispersibility of the silica particles is sufficient. From the above view, the content of the porous particles (a) is more preferably 2.5 to 5000 ppm, more preferably 2.5 to 1000 ppm, particularly preferably 2.5 to 500 ppm, and especially preferably 2.5 to 100 ppm, for example, specifically 2.5 to 50 ppm.

Also, the plastic product covered by the second embodiment may use an XRF-identifiable marker (b) including a metallic salt or a metallic atom as a chemical tag instead of the porous silica particles (a).

Examples of the XRF-identifiable marker (b) include those described in Japanese Translation of PCT International Application Publication No. JP-T-2019-529676 and the like. More specifically, a form that includes one or more types of compounds or elements whose presence can be confirmed by fluorescent X-rays and in which the presence thereof is read by a reading device capable of X-ray irradiation may be used. Fluorescent X-rays of different wavelengths indicating the presence of a specific compound or a specific element can be detected in a combination of a specific compound or a specific element according to a wavelength spectral profile indicating a predetermined value or more. By assigning this combination as an identification code, it can be used as a chemical tag.

Elements that can be used as XRF-identifiable markers (b) here include, for example, one or more types of atoms selected from Na, Si, P, S, Cl, K, Ca, Ti, V, Cr, Mn, Fe, Co, Ni, Cu, Zn, Ga, As, Br, Rb, Sr, Y, Zr, Nb, Mo, Tc, Ru, Rh, Ag, Cd, In, Sn, Sb, Te, I, Cs, Ba, La, and Ce. From the viewpoint of the identification property, it is desirable to use a combination of a plurality of types as XRF-identifiable markers.

As a compound included in the resin used as a raw material constituting the XRF-identifiable marker (b), a hydroxylated compound, chloride compound, bromide compound, iodide compound, oxide, a sulfonate, carboxylate, phosphate, oxide, sulfide, and the like of metallic elements among the above elements can be selected and used under conditions that do not interfere with the physical properties of the plastic product to be used.

In addition, both the porous silica particles (a) and the XRF-identifiable marker (b) may be included as a chemical tag. Furthermore, it may contain components that can be used as chemical tags other than these (a) and (b).

The method of adding the chemical tag is not particularly limited, but the chemical tag and the resin (for example, the polyester) used as a raw material for the plastic product may be master-batched in advance and the chemical tag may be added directly at the raw material input stage in the step of manufacturing the plastic product.

Regardless of the type of chemical tag, the plastic product including the chemical tag is shipped as corresponding to the article information with which the chemical tag included at the time of manufacture is associated. After the plastic product is distributed on the market, the chemical tag is included and kept even in a stage where it is collected as a waste material. The collection company or the manufacturer of the recycled plastic product can receive the associated article information from a server to be described below by reading the chemical tag included in the waste plastic product. Using this article information, it is possible to separate each of the plastic products that are the source of the waste plastic products. As described above, by separating the plastic product, the quality of the recycled raw material can be aligned and the quality of the recycled plastic product is stabilized.

### <Manufacture of recycled plastic product>

A plastic product usage flow including an example of a method of manufacturing a recycled plastic product according to the second embodiment and an example of an embodiment of a digital tracking ecosystem that executes it will be described together with the flowchart of FIG. 1 and the functional block diagram of FIG. 2.

### <Manufacture of recycled plastic product: premise>

First, as a preliminary step of the second embodiment (S100), a manufacturing company Ma introduces a chemical tag 52 into a resin used as a raw material (S101) in manufacturing a plastic product 51 and molds it into the plastic product 51 having a predetermined shape such as a film from the raw material including the resin into which the chemical tag 52 is introduced (S102).

Next, the manufacturing company Ma of the plastic product 51 decides on article information to be associated with a wavelength spectral profile of the chemical tag 52. Thereafter, the manufacturing company Ma collectively registers the wavelength spectral profile and the article information to be associated in a server 31 (S103). As described above, this article information may include product identification information such as a manufacturing country, manufacturing company, manufacturing factory, and the like of the plastic product 51, configuration, composition, and purpose information, and the like of the plastic product 51, and may particularly include information for identifying the manufacturing company Ma as manufacturer information.

The server 31, which is a server for the digital tracking ecosystem according to the second embodiment, can be accessed through a network from a registration terminal 2 of the manufacturing company Ma. The server 31 may be installed in the intranet of the manufacturing company Ma or may be installed on the Internet. However, when the server 31 is installed in the intranet, it is required to be accessible from the system 20 to be described below.

The server 31 has a database 32 (DB 32) that records the wavelength spectral profile and the article information in association with each other. When the server 31 performs the record process in the database 32, a registration/reception means 33 for receiving data transmitted from the registration terminal 2 of the manufacturing company Ma is executed. The registration/reception means 33 can include, for example, the transmission of a web page having an input form implemented in a web server function, an API for receiving information from the input form and registering the information in the database 32, and the like. Thereby, it is possible to sequentially receive new information registration from the registration terminal 2 of the manufacturing company Ma to the database 32. Every time the manufacturing company Ma develops a new plastic product 51 and determines the wavelength spectral profile of the chemical tag 52 to be associated with the plastic product 51, it may be registered sequentially. Also, the server 31 may perform addition to the article information associated with the wavelength spectral profile in the database 32 with the registration/reception means 33. For example, the addition may include addition of shipping records and customer information of the corresponding plastic product 51. Also, the server 31 receives a request based on the wavelength spectral profile to make an inquiry with respect to the database 32, reads article information registered in the database 32 in association with the wavelength spectral profile, and executes an article information response means 34 to make an article information response. For example, a specific form of implementation may include implementation as an API published on the Internet or intranet. By executing the article information response means 34 in response to an inquiry based on the wavelength spectral profile from outside of the manufacturing company Ma, the article information can be returned to the inquiry terminal 22 that has made the inquiry.

Also, a procedure performed by the manufacturing company Ma so far is not necessarily limited to the above order. For example, after the chemical tag 52 is introduced into the resin used as a raw material (S101) and before it is molded into the plastic product 51 (S102), the article information and the wavelength profile of the chemical tag 52 may be collectively registered in the database 32 (S103) according to the order.

Also, before the introduction of the chemical tag (S101), the article information of the plastic product 51 to be manufactured may be determined in advance and registered in the database 32 (S103) according to the order.

Among these, as shown in FIG. 1, the order in which molding into the plastic product 51 is performed (S102) and then registration is performed in the database 32 (S103) is preferred. For example, because a plastic film, which is an example of the plastic product 51, often has a plurality of layers, and it is assumed that the configuration/composition of the like of the plastic product 51 is complicated, it is preferable to perform the registration after the plastic product 51 is decided on.

Also, the manufacturing company Ma ships the plastic product 51 (S104). At this time, the plastic product 51 includes the chemical tag 52. As described above, the chemical tag 52 has a wavelength spectral profile associated with the article information of the corresponding plastic product 51.

The manufactured plastic product 51 is distributed on the market in a state in which it includes the chemical tag 52 (S111). Here, distributions on the market may include not only distribution between companies but also distribution to general consumers. Because the plastic product 51 is tagged with the resin itself as a raw material by the chemical tag 52, it is valid even if it is distributed to general consumers. That is, even the plastic product 51 once held with the hands of a general consumer can be easily identified, separated, and used as a suitable raw material for a recycled plastic product 51b by the digital tracking ecosystem according to the second embodiment. Once the plastic products are distributed on the market, they are collected by businesses, local governments, and the like (S112). A waste plastic article 51a collected at this stage may be a mixture of various types of plastic products. Of course, according to the decision of a collection entity such as each municipality, it may be classified according to each identification indication mark or material indication mark for plastic recycling. The chemical tag 52 introduced at this stage is included in the waste plastic article 51a.

### <Manufacture of recycled plastic product: collection>

This is the premise until the method of manufacturing the recycled plastic product according to the second embodiment is started. In producing the recycled plastic product 51b, an operator performs a collection step of acquiring the collected waste plastic article 51a (S121). Because the waste plastic article 51a collected at this stage is collected after distributed on the market once, it is limited to classification based on the information described in the identification display mark and the material display mark and is mixed by various manufacturing companies Ma.

In addition, the shape of the waste plastic article 51a to be collected is not particularly limited. For example, when the waste plastic article 51a is a waste plastic film, its shape may be a roll shape, a lump shape, or a sheet shape. However, in the next reading step and the separation step, if it is unsuitable that the size and shape of the waste plastic article 51a are different, a cutting device for aligning the shape may be installed and handling may be facilitated by making it into a flake shape.

### <Manufacture of recycled plastic product: reading>

The digital tracking ecosystem 20 (hereinafter referred to as "system 20") according to the second embodiment includes a reading device 21 that executes a reading step of reading the wavelength spectral profile of the chemical tag 52 included in the waste plastic article 51a (S122). The reading device 21 needs to include a device that reads at least the chemical tag 52 corresponding to the original plastic product 51 to be recycled. When the plastic product 51 manufactured by one manufacturing company Ma is preferentially used and recycled, the reading device 21 capable of reading the chemical tag 52 adopted by one manufacturing company Ma is required. When trying to correspond to various chemical tags 52 adopted by a large number of manufacturing companies Ma, the system 20 preferably aligns devices corresponding to the various types of chemical tags 52. For example, a device that exclusively reads the wavelength spectral profile of porous silica particles cannot read XRF-identifiable markers because a light source for emitting light, a spectroscopic method, and a processing method are fundamentally different. Of course, one multi-compatible device corresponding to a plurality of types of chemical tags 52 may be adopted.

### <Manufacture of recycled plastic product: inquiry and acquisition>

The system 20 has the inquiry terminal 22 that receives the read wavelength spectral profile and executes an inquiry step of making an inquiry on the basis of the wavelength spectral profile (S123). The inquiry terminal 22 is connected to the server 31 via the Internet or an intranet. Here, as an example, an example in which the control device 26 that manages each device constituting the system 20 once receives a wavelength spectral profile from the reading device 21 and makes an inquiry using the inquiry terminal 22 is shown. As another embodiment, for example, the reading device 21 may directly transfer the wavelength spectral profile to the inquiry terminal 22 without going through the control device 26. Also, the inquiry terminal 22 does not have to be an independent device and the reading device 21 and the inquiry terminal 22 may be an integrated device, or the control device 26 and the inquiry terminal 22 may be an integrated device. The server 31, which has received the inquiry from the inquiry terminal 22, executes the article information response means 34 and sends a response of article information associated with a wavelength spectral profile queried from the database 32 to the inquiry terminal 22. The control device 26 of the system 20 thus executes an information acquisition step that receives the article information (S124).

In addition, as another form, the information acquisition step (S124) can be implemented when the control device 26 receives a part of the article information provided in the database 32 of the server 31 in advance and refers to the part thereof. In this case, the inquiry step for the server 31 is omitted. However, in this case, the waste plastic article 51a that can be confirmed is limited to some types assumed in advance.

### <Manufacture of recycled plastic products: separation>

In the method of manufacturing the recycled plastic product according to the second embodiment, a recycled plastic product 51b is manufactured on the basis of the received article information. If chemical tags 52 included in a large number of waste plastic articles 51a all have a common wavelength spectral profile, they may be recycled according to the article information associated with the wavelength spectral profile.

However, in reality, a case where the waste plastic article 51a once distributed on the market is mixed with a plurality of types of chemical tags 52 or something without the chemical tag 52 derived from the plastic product 51 before the chemical tag 52 becomes widespread is mixed is conceivable. For this reason, in many cases, it is preferable to execute a separation step of separating the waste plastic articles 51a (S125) and the system 20 preferably includes a separation device 24 that performs separation. The separation device 24 preferably can separate the waste plastic articles 51a in cooperation with the reading device 21. For example, the reading device 21 and the separation device 24 are installed along a portable device such as a belt conveyor, a process until the inquiry terminal 22 makes an inquiry and receives the article information on the basis of the wavelength spectral profile read by the reading device 21 for one waste plastic article 51a is completed before the one waste plastic article 51a reaches the separation device 24, and the first waste plastic article 51a is separated on the basis of the acquired article information. In this way, accurate and smooth separation is possible in sequential flow work.

Also, the waste plastic article 51a, which does not have a chemical tag 52 or from which it is difficult to read the wavelength spectral profile for some reason, can be separated from the waste plastic article 51a from which the wavelength spectral profile can be read, as an unreadable waste plastic article 51a. Also, the separation device 24 itself is not particularly limited and the separation method of dropping an individual object on a chute, suctioning it up with a suction machine, and picking it up is not particularly limited. Also, a standard for separation is based on, for example, separation differing according to article information from the portable device, separation differing according to each group having common specific information in the article information, or separation differing according to common manufacturer information, and may be arbitrarily set. For example, an operation in which if a difference between lot numbers is allowed and the manufacturer information is derived from the same manufacturing company Ma and the same product, they are separated as one may be used. Such a separation standard is appropriately decided in accordance with the purity, grade, purpose, and the like of the recycled plastic product 51b desired to be manufactured.

### <Manufacture of recycled plastic product: recycling>

The waste plastic article 51a, which has been appropriately separated in this way, is separated, for example, according to a product derived from a specific manufacturing company Ma, a product derived from a specific composition, and a product derived from a specific purpose, and becomes a raw material of the recycled plastic product 51b (a recycled raw material). In this way, because the quality of the recycled raw material used for the recycled plastic product 51b can be aligned by separating the waste plastic article 51a, the quality of the recycled plastic product 51b is stabilized.

The recycling device 25 of the system 20 performs a recycling step of manufacturing the recycled plastic product 51b from the waste plastic article 51a (S126). In the recycling process, it is preferable to first obtain recycled raw materials. The form of the recycled raw material is preferably flakes and/or chips. That is, it is preferable to perform a form processing step (S202) in which the waste plastic article 51a is crushed to flakes and/or the flakes are chipped (pellets) rather than using the waste plastic article 51a as a recycled raw material as it is. As a method of obtaining the flakes, a conventionally known method can be used. For example, a method of obtaining flakes by crushing the waste plastic article 51a with a crusher may be used. As a method of chipping flakes, conventionally known methods can be used. For example, a method of obtaining a chipped raw material by performing melt extrusion of the flakes and then cutting the strand-shaped molten extrusion may be used. Also, in the recycling step, there may be a refining step (S201) of removing the functional layer before and after the form processing step (S202). The actual plastic product 51 and the waste plastic article 51a often include a functional layer for improving the functionality of the product and it may be preferable to remove the functional layer and use it as a recycled raw material because foreign matter and foreign odorization problems may occur when the recycled plastic product 51b is manufactured if the functional layer is not removed and used as a recycled raw material according to a composition and components of the functional layer. Also, it may be preferable to remove the functional layer according to the grade and required quality of the recycled plastic product 51b. Examples of a refining method in a refining process include physical methods such as scraping and polishing, a chemical method such as cleaning with an alkaline solution or the like, and a chemical method such as decomposing into monomers. These methods can be independently used and one or more of these methods may be used together. For example, FIG. 3 shows a case where the waste plastic article 51a is separated, refined (S201), and then flaked and/or chipped (pellet) (S202) to obtain a recycled raw material. As described above, step S201 may be performed after step S202, and step S201 may be omitted. Thus, the method of obtaining recycled raw materials is not particularly limited and it is possible to select an appropriate one as appropriate with reference to the article information.

In the recycling step, the recycled raw material is then used to be molded into the recycled plastic product 51b having a predetermined shape such as a film (S203). In addition, when the waste plastic article 51a is flaked before the reading step and the separation step and the flaked material is used as it is, the recycled plastic product 51b can be molded without going through the method of obtaining the recycled raw material. In this case, "using recycled raw materials" indicates that in addition to using recycled raw materials alone, recycled raw materials and virgin raw materials are mixed and used to prevent deterioration in the quality of the recycled plastic product 51b. That is, "using recycled raw materials" indicates including the obtained recycled raw materials. Also, when a recycled raw material is obtained, if the chemical tag 52 is decomposed or separated or if the performance of the chemical tag 52 is inactivated, the chemical tag 52 may be introduced again into the resin as a recycled raw material when the recycled plastic product 51b is manufactured. Of course, when the tag performance of the chemical tag 52 in the recycled raw material is sufficient, it can be used as a raw material resin for the recycled plastic product 51b as it is without introducing the chemical tag 52 again. In addition, the molding processing method is not particularly limited, a conventionally known method can be used, and it is also possible to select an appropriate one as appropriate with reference to the article information.

### <Manufacture of recycled plastic product: calculation of carbon dioxide emission reduction amount>

When a calculation step of calculating a carbon dioxide emission reduction amount according to the manufacture of the recycled plastic product 51b in the system 20 is performed, the control device 26 of the system 20 can preferably effectively utilize a calculated value (S127). Specifically, by using the amount of recycled raw materials in the recycled plastic product 51b produced by the system 20, compared to when the original plastic product 51 is manufactured from raw materials and a similar plastic is manufactured, a model indicating a degree to which a carbon dioxide emission amount per unit mass of the recycled plastic product 51b to be manufactured (a carbon dioxide emission reduction amount per unit mass) can be reduced is created for each type of plastic that can be identified by the article information. Thereafter, the mass of the specific recycled plastic product 51b to be manufactured is added across a unit period and the mass is multiplied by the carbon dioxide emission reduction amount per unit mass, such that it is possible to calculate a total carbon dioxide emission reduction amount. In addition to this, a calculation method of appropriately calculating the carbon dioxide emission reduction amount from a recycled raw material amount in the recycled plastic product 51b may be adopted. Thereby, it is possible to ascertain the carbon dioxide emission amount to be reduced by the activities of a business operator who manufactures the recycled plastic product 51b and it can be used as a basis for emission right trading and it is possible to promote emission reductions throughout the country.

Also, when the control device 26 calculates a total carbon dioxide emission reduction amount due to the manufacture of the recycled plastic product 51b in the system 20, it is more preferable to be able to ascertain which manufacturing company Ma has been able to reduce the carbon dioxide emission amount due to its own plastic by performing a calculation process for manufacturer information indicating the manufacturing company Ma used as a source of the target plastic product 51. In implementing the second embodiment, the manufacturing company Ma manufactures the recycled plastic product 51b in-house or at an affiliated company, and the manufacturing company Ma can ascertain a carbon dioxide amount that can be reduced by manufacturing the recycled plastic product 51b.

When there are a plurality of business sites that execute the system 20, the carbon dioxide emission reduction amount calculated at each business site is aggregated by the server 31, a separate server provided in the manufacturing company Ma, and another server and it is more preferable that carbon dioxide emission reduction amounts achieved at all domestic business sites can be aggregated. In this aggregation, it is more preferable to be able to aggregate the carbon dioxide emission reduction amounts for the manufacturer information that can be calculated in the separation process according to the second embodiment. Thereby, a carbon dioxide emission reduction amount obtained in a process in which a specific manufacturing company Ma manufactures the recycled plastic product 51b can be used in emission right trading, subsidy application, compliance confirmation, and the like.

The manufactured recycled plastic product 51b returns to step S 103 of the flow. That is, the manufacturing company Ma again decides on article information to be associated with a wavelength spectral profile of the chemical tag 52 and collectively registers the wavelength spectral profile and the article information to be associated in the server 31 (S103). In addition, even if the wavelength spectral profile is the same before and after recycling, the article information to be associated may not be the same. For example, if it can be collected as a waste material directly from the customer, the article information related to the purpose can be changed. Also, even if the article information to be associated is the same before and after recycling, it is preferable to register it again in the database 32 and accumulate the data so that it can be known how many recycling cycles have been passed, i.e., for the purpose of keeping a recycling history. Of course, as shown in FIG. 4, step S103 may be skipped and the process may proceed to step S104 as it is. Thereafter, it is distributed again to the market as a recycled plastic product 51b using a recycled raw material. Of course, the distributed recycled plastic product 51b can also be collected as a waste recycled plastic product in which the recycled plastic product 51b has become a waste material, and it can again be preferably used as a recycled raw material for a recycled plastic product. Thus, because the second embodiment is effective even in iterated recycling, it leads to the support of the circulation cycle of plastic resources.

Appendixes will be described below in relation to the second embodiment.

### (Appendix 1)

A digital tracking ecosystem including:
a reading device configured to read a wavelength spectral profile of a chemical tag provided in a waste plastic product;
an inquiry terminal configured to make an inquiry on the basis of the wavelength spectral profile and receive article information associated with the wavelength spectral profile; and
a recycling device configured to manufacture a recycled plastic product from the waste plastic product on the basis of the article information.

### (Appendix 2)

The digital tracking ecosystem according to claim 1, wherein the article information includes manufacturer information.

### (Appendix 3)

The digital tracking ecosystem according to appendix 1 or 2, wherein the article information includes product identification information of the plastic product from which the waste plastic product is derived.

### (Appendix 4)

The digital tracking ecosystem according to any one of appendixes 1 to 3, including a separation device for separating the waste plastic product based on the article information.

### (Appendix 5)

The digital tracking ecosystem according to any one of appendixes 1 to 4, including a control device configured to execute a carbon dioxide emission reduction calculation step of calculating a carbon dioxide emission reduction amount from a recycled raw material amount in the recycled plastic product recycled by the recycling device.

### (Appendix 6)

The digital tracking ecosystem according to any one of appendixes 1 to 4,
wherein the article information includes manufacturer information, and
wherein the digital tracking ecosystem includes a control device configured to calculate a carbon dioxide emission reduction amount for each manufacturer information item within a recycled raw material amount in the recycled plastic product recycled by the recycling device.

### (Appendix 7)

The digital tracking ecosystem according to any one of appendixes 1 to 6, wherein the chemical tag includes an XRF-identifiable marker or micro-tag silica and the reading device is compatible with one or both thereof.

### (Appendix 8)

A server for a digital tracking ecosystem including:
a database configured to record a wavelength spectral profile of a chemical tag assigned to a plastic product and article information of the plastic product in association with each other,
wherein an article information response means configured to respond to the article information that has been associated in response to an inquiry based on the wavelength spectral profile is executed.

### (Appendix 9)

The server for the digital tracking ecosystem according to appendix 8, wherein the article information includes manufacturer information.

### (Appendix 10)

A method of manufacturing a recycled plastic product, the method including:
a reading step of reading a wavelength spectral profile of a chemical tag provided in a waste plastic product;
an information acquisition step of receiving article information associated with the wavelength spectral profile; and
a recycling step of manufacturing the recycled plastic product from the waste plastic product on the basis of the article information.

### (Appendix 11)

The method of manufacturing the recycled plastic product according to appendix 10, wherein the article information includes manufacturer information.

### (Appendix 12)

The method of manufacturing the recycled plastic product according to appendix 10 or 11, wherein the article information includes product identification information of the plastic product from which the waste plastic product is derived.

### (Appendix 13)

The method of manufacturing the recycled plastic product according to any one of appendixes 10 to 12, including a separation step of separating the waste plastic product based on the article information.

### (Appendix 14)

The method of manufacturing the recycled plastic product according to any one of appendixes 10 to 13, including a carbon dioxide emission reduction calculation step of calculating a carbon dioxide emission reduction amount from a recycled raw material amount in the recycled plastic product recycled in the recycling step.

### (Appendix 15)

The method of manufacturing the recycled plastic product according to appendix 14,
wherein the article information includes manufacturer information, and
wherein a carbon dioxide emission reduction amount for each manufacturer information item is calculated from a recycled raw material amount in the recycled plastic product recycled in the recycling step.

### (Appendix 16)

The method of manufacturing the recycled plastic product according to any one of appendixes 10 to 15, wherein the chemical tag includes an XRF-identifiable marker or micro-tag silica.

While several embodiments of the present invention have been described above, these embodiments have been presented by way of example only, and are not intended to limit the scope of the inventions. These embodiments may be embodied in a variety of other forms. Various omissions, substitutions, and combinations may be made without departing from the spirit of the inventions. The inventions described in the accompanying claims and their equivalents are intended to cover such embodiments of modifications as would fall within the scope and spirit of the inventions.

A program for implementing the factory terminal device 130 or the like described above may be recorded on a computer-readable recording medium and a computer system may be allowed to read and execute the program. The "computer system" used here is assumed to include an operating system (OS) or hardware such as peripheral devices. Also, the "computer-readable recording medium" refers to a flexible disk, a magneto-optical disc, a read-only memory (ROM), a portable medium such as a compact disc-ROM (CD-ROM), or a storage device such as a hard disk embedded in the computer system. Furthermore, the "computer-readable recording medium" is assumed to include a medium that holds a program for a certain period of time, such as a volatile memory (random-access memory (RAM)) inside a computer system used as a server or a client when the program is transmitted via a network such as the Internet or a communication circuit such as a telephone circuit. Also, the above-described program may be transmitted from a computer system storing the program in a storage device or the like to another computer system via a transmission medium or by transmission waves in a transmission medium. Here, the "transmission medium" for transmitting the program refers to a medium having a function of transmitting information, as in a network (communication network) such as the Internet or a communication circuit (communication line) such as a telephone circuit. Also, the above-described program may be a program for implementing some of the above-described functions. Also, the above-described program may be a so-called differential file (differential program) capable of implementing the above-described function in combination with a program already recorded on the computer system.

### [Industrial Applicability]

According to the present invention, it is possible to improve the quality of a recycled product.

### [Reference Signs List]

Ma Manufacturing company
1 Recycling system
2 Registration terminal
20 System
21 Reading device
22 Inquiry terminal
24 Separation device
25 Recycling device
26 Control device
31 Server
32 Database
33 Registration/reception means
34 Article information response means
51 Plastic product
51a Waste plastic article
51b Recycled plastic product
52 Chemical tag
100 Blockchain
120 Node server
121 Tag information DB
130 Factory terminal device
301 CPU
302 Memory
303 Input device
304 Chemical tag reader
305 Communication I/F
307 Display
901 Input portion
902 Generation portion
903 Registration portion
904 Acquisition portion
905 Calculation portion
906 Output portion
1001 First acquisition portion
1002 Second acquisition portion
1003 Output portion

## Claims

1. An information generation method comprising:
a manufacturing step of manufacturing a product comprising a plastic article to which a chemical tag is attached;
an input step of inputting product information related to recycling of the product; and
a generation step of generating tag product information with which the product information is associated in a wavelength spectral profile of the chemical tag readable from the product; and
a registration step of registering the tag product information.

2. The information generation method according to claim 1,
wherein the manufacturing step comprises one or more steps until a final product is reached, and
wherein the generation step comprises generating tag product information obtained by associating new product information with the wavelength spectral profile every time each step is performed in the manufacturing step.

3. The information generation method according to claim 2,
wherein the manufacturing step comprises manufacturing the final product having a chemical tag identical to a chemical tag attached at a raw material stage.

4. The information generation method according to claim 2,
wherein the manufacturing step comprises manufacturing the final product having a chemical tag different from a chemical tag attached at a raw material stage.

5. The information generation method according to any one of claims 2 to 4,
wherein the manufacturing step comprises one or more steps until a final product is reached, and
wherein two or more types of chemical tags are attachable in one step.

6. The information generation method according to any one of claims 1 to 5, the information generation method comprising:
an acquisition step of acquiring the wavelength spectral profile read from the product manufactured in the manufacturing step,
wherein the generation step comprises generating tag product information obtained by associating the product information with the wavelength spectral profile acquired in the acquisition step.

7. The information generation method according to any one of claims 1 to 6,
wherein the registration step comprises registering the tag product information in another device according to a system using a blockchain.

8. The information generation method according to any one of claims 1 to 7,
wherein the manufacturing step comprises manufacturing at least one of biomass and recycled plastic products comprising at least one of chemically tagged biomass and recycled plastic articles, and
wherein the input step comprises inputting the product information related to recycling of the at least one of the biomass and recycled plastic products.

9. The information generation method according to claim 8, the information generation method comprising:
a calculation step of calculating a carbon dioxide emission reduction amount on the basis of a raw material amount of the recycled plastic product.

10. The information generation method according to any one of claims 1 to 9,
wherein the chemical tag is micro-tag silica.

11. A recycling method comprising:
a first acquisition step of acquiring a wavelength spectral profile read from a waste plastic article obtained by decomposing a product to which a chemical tag is attached;
a second acquisition step of acquiring product information related to recycling of the waste plastic article associated with the wavelength spectral profile; and
an output step of outputting information for separating the waste plastic article on the basis of the product information.

12. An information generation device comprising:
an input portion configured to input product information related to recycling of a manufactured product comprising a plastic article to which a chemical tag is attached; and
a generation portion configured to generate tag product information with which the product information is associated in a wavelength spectral profile readable from the product; and
a registration portion configured to register the associated information.

13. A recycling device comprising:
a first acquisition portion configured to acquire a wavelength spectral profile read from a waste plastic article obtained by decomposing a product to which a chemical tag is attached;
a second acquisition portion configured to acquire product information related to recycling of the waste plastic article associated with the wavelength spectral profile; and
an output portion configured to output information for separating the waste plastic article on the basis of the product information.
